# FASCICULE DE BREVET EUROPEEN

(11) **EP 4 157 187 B1**
(45) Date de publication et mention de la délivrance du brevet: **10.07.2024**
(21) Numéro de dépôt: 21722266.0
(22) Date de dépôt: 05.05.2021
(51) Int. Cl.: A61G 7/08, B62B 3/04

(54) **SYSTEME DE PROPULSION ELECTRIQUE AMOVIBLE POUR UN OBJET ROULANT AVEC UN MOYEN DE PREHENSION ET DE LEVAGE COMBINES ET SIMULTANES**
ABNEHMBARES ELEKTRISCHES ANTRIEBSSYSTEM FÜR EIN ROLLOBJEKT MIT MITTELN ZUM KOMBINIERTEN UND GLEICHZEITIGEN GREIFEN UND HEBEN
REMOVABLE ELECTRIC PROPULSION SYSTEM FOR A ROLLING OBJECT WITH A MEANS FOR COMBINED AND SIMULTANEOUS GRIPPING AND LIFTING

(30) Priorité: 29.05.2020 FR 2005678
(43) Date de publication de la demande: 05.04.2023
(73) Titulaire: IFP Energies nouvelles, 92500 Rueil-Malmaison (FR)
(72) Inventeur: VENTURI, Stephane, 92852 RUEIL-MALMAISON CEDEX (FR); LECOINTE, Bertrand, 92852 RUEIL-MALMAISON CEDEX (FR)
(74) Mandataire: IFP Energies nouvelles
(86) Numéro de dépôt international: PCT/EP2021/061866
(87) Numéro de publication internationale: WO 2021/239418

(56) Documents cités:
- WO-A1-2018/174781
- US-A1- 2006 045 711
- US-A1- 2008 101 903

## Description

### Domaine technique

L'invention concerne le domaine de transport des objets roulants, en particulier des lits roulants, par exemple des lits d'hôpitaux.

Le déplacement des charges lourdes roulantes par un utilisateur peut entraîner des difficultés pour l'utilisateur, en particulier si cette action est répétée, telles que des troubles musculo-squelettiques.

### Technique antérieure

Afin de rendre le déplacement des charges lourdes roulantes plus facile et plus ergonomique, il a été envisagé d'équiper ces charges lourdes de machines électriques. Par exemple, une première idée a consisté à équiper chaque lit d'hôpital d'un système d'entraînement électrique des roues. Une telle solution est onéreuse, car elle nécessite le remplacement ou la modification de l'ensemble des lits, ce que les hôpitaux ne peuvent pas se permettre. De plus, le système d'entraînement et sa batterie augmentent le poids du lit. Par conséquent, lorsque la batterie est déchargée, les efforts à fournir pour déplacer le lit sont plus importants.

De la même façon, dans le domaine de la logistique ou du commerce, il a été envisagé de rendre électrique tous les chariots. Là aussi, une telle solution est onéreuse.

Une alternative est de prévoir un système amovible de propulsion des objets roulants. Plusieurs solutions techniques ont été envisagées.

Par exemple, la demande de brevet WO 01/85086 décrit un système de propulsion motorisé pour un lit. Le système de propulsion est configuré pour s'atteler à un ou plusieurs points du lit. De par les moyens d'attelage prévus pour ce système de propulsion, ce système ne peut pas être universel et adapté à différents objets roulants. En effet, il ne peut pas être attelé à un objet roulant non muni d'une pièce d'attelage. De plus, pour ce système de propulsion, toutes les roues de l'objet roulant restent en contact avec le sol. Par conséquent, l'orientation de l'attelage (système de propulsion et lit) est plus compliquée, les forces de frottement sont élevées, et la roue motorisée nécessite plus de puissance.

La demande de brevet WO 2012/171079 décrit un deuxième système de propulsion d'un lit d'hôpital. Le système de propulsion est configuré pour lever deux roues du lit. Toutefois, le mécanisme de préhension des roues est complexe et encombrant : la dimension latérale (direction parallèle à l'axe des roues motorisées) est importante (supérieure à la largeur des roues du lit) et peut dépasser les dimensions latérales du lit, ce qui peut être gênant pour le déplacement du lit, en particulier dans un espace réduit tel qu'un couloir ou un ascenseur d'hôpital.

La demande de brevet WO 2013/156030 décrit un troisième système de propulsion d'un lit d'hôpital. Le système de propulsion est configuré pour lever deux roues du lit. Toutefois, le système de levage nécessite plusieurs actuateurs. Il est donc complexe.

La demande de brevet WO 2018/174781 décrit un quatrième système de propulsion d'un lit d'hôpital.

Pour résoudre les problématiques de l'art antérieur, le but de l'invention est de proposer un système adaptable à différents objets roulants et présentant un système d'attelage simple, rapide et peu onéreux.

Pour se faire, la présente invention concerne un système de propulsion électrique amovible destiné à être attelé à un objet roulant. Le système de propulsion électrique comprend un châssis muni d'au moins une roue entraînée par une machine électrique, et d'au moins une roue non entraînée. De plus, le système de propulsion électrique, de préférence le châssis, comprend des moyens d'attelage du système de propulsion à l'objet roulant. En outre, les moyens d'attelage comprennent au moins un moyen de préhension et de levage combinés et simultanés d'au moins une roue de l'objet roulant.

### Résumé de l'invention

L'invention, qui est exposée dans le jeu de revendications joint, concerne un système de propulsion électrique amovible pour un objet roulant, ledit système de propulsion comprenant un châssis muni d'au moins une roue entrainée par une machine électrique et d'au moins une roue non entraînée, ledit système de propulsion électrique comprenant au moins un moyen d'attelage dudit système de propulsion électrique audit objet roulant. De plus, ledit moyen d'attelage comprend au moins un moyen de préhension et de levage combinés et simultanés d'au moins une roue dudit objet roulant.

Ledit moyen de préhension et de levage combinés et simultanés comprend au moins un bâti connecté au châssis et au moins un élément basculant apte à supporter la roue de l'objet roulant, ledit bâti étant relié par une première liaison pivot d'axe sensiblement horizontal à au moins un élément basculant.

De préférence, ledit moyen de préhension et de levage combinés et simultanés comprend au moins deux éléments basculants, lesdits éléments basculants étant reliés entre eux, deux à deux, par des axes sensiblement horizontaux et parallèles entre eux.

Selon une variante de l'invention, ledit moyen de préhension et de levage combinés et simultanés comprend au moins un dispositif de limitation du débattement angulaire d'au moins un élément basculant.

Avantageusement, ledit moyen de préhension et de levage combinés et simultanés comprend au moins une pièce de maintien d'au moins un élément basculant en position relevée.

Selon une configuration de l'invention, au moins un élément basculant comprend une pièce guide pour orienter la roue de l'objet roulant dans ledit élément basculant comprenant ladite pièce guide.

Selon une mise en oeuvre de l'invention, au moins un élément basculant comprend un moyen de réglage de la largeur dudit élément basculant, ledit moyen de réglage de la largeur dudit élément basculant étant de préférence un flasque mobile ou une cale.

De manière préférée, le système de propulsion électrique comprend deux moyens de préhension et de levage combinés et simultanés, chaque moyen de préhension et de levage combinés et simultanés comprenant un actionneur distinct.

Selon un mode de réalisation de l'invention, ledit moyen de préhension et de levage combinés et simultanés est configuré pour réaliser simultanément la préhension et le levage d'au moins deux roues de l'objet roulant, lesdites au moins deux roues de l'objet roulant étant de préférence positionnées sur un axe sensiblement transversal audit système de propulsion électrique.

Avantageusement, ledit moyen de préhension et de levage combinés et simultanés comprend au moins un moyen de déplacement dans la direction transversale dudit moyen de préhension et de levage combinés et simultanés, la direction transversale étant orthogonale à la direction longitudinale, la direction longitudinale étant la direction principale de déplacement dudit système de propulsion électrique amovible.

Préférentiellement, ledit moyen de préhension et de levage combinés et simultanés comprend un élément guide pour orienter la roue de l'objet roulant dans une direction proche d'une direction sensiblement perpendiculaire à la direction longitudinale dudit châssis dudit système de propulsion, avant la saisie et la levée de ladite roue de l'objet roulant.

De manière avantageuse, ledit moyen de préhension et de levage combinés et simultanés comprend une première butée pour immobiliser l'objet roulant.

Selon une variante de l'invention, le moyen de préhension et de levage combinés et simultanés comprend un dispositif de relevage configuré pour garantir une garde au sol supérieure à une hauteur prédéfinie en position relevée, de préférence, la hauteur prédéfinie étant d'au moins 40mm.

De préférence, le dispositif de relevage comprend au moins un ressort de rappel et/ou au moins un contrepoids et/ou au moins une tige entraînée.

Selon une configuration avantageuse de l'invention, le moyen de préhension et de levage combinés et simultanés comprend un moyen de réglage en position longitudinale.

L'invention concerne aussi un attelage comprenant un objet roulant et un système de propulsion électrique selon l'une des caractéristiques précédentes, ledit objet roulant étant attelé audit système de propulsion électrique par lesdits moyens d'attelage.

L'invention concerne également un procédé pour atteler un objet roulant au système de propulsion électrique tel que décrit précédemment, comprenant les étapes suivantes :
a) on déplace longitudinalement le système de propulsion électrique de manière à approcher le moyen de préhension et de levage combinés et simultanés d'au moins une roue de l'objet roulant,
b) on déplace le moyen de préhension et de levage combinés et simultanés ou le système de propulsion électrique dans la direction transversale pour permettre le contact entre la roue de l'objet roulant et le moyen de préhension et de levage combinés et simultanés ; et
c) on continue le déplacement dans la direction transversale pour permettre la préhension et le levage combinés et simultanés d'au moins une roue de l'objet roulant.

### Liste des figures

D'autres caractéristiques et avantages du système et du procédé selon l'invention, apparaîtront à la lecture de la description ci-après d'exemples non limitatifs de réalisations, en se référant aux figures annexées et décrites ci-après.
La figure 1 est une vue de dessus d'un système de propulsion électrique selon un mode de réalisation de l'invention.
La figure 2 est une vue de côté d'un système de propulsion électrique selon une première variante de réalisation de l'invention.
La figure 3 est une vue de côté d'un système de propulsion électrique selon une deuxième variante de réalisation de l'invention.
La figure 4 est une vue de dessus d'un système de propulsion électrique selon un mode de réalisation attelé à un objet roulant, selon l'invention.
La figure 5 illustre un premier mode de réalisation d'un moyen de préhension et de levage combinés et simultanés d'un système de propulsion de l'invention, et son procédé de préhension et de levage associé.
La figure 6A illustre un deuxième mode de réalisation d'un moyen de préhension et de levage combinés et simultanés d'un système de propulsion de l'invention, et son procédé de préhension et de levage associé.
La figure 6B illustre un troisième mode de réalisation d'un moyen de préhension et de levage combinés et simultanés d'un système de propulsion de l'invention, et son procédé de préhension et de levage associé.
La figure 7A illustre un quatrième mode de réalisation d'un moyen de préhension et de levage combinés et simultanés d'un système de propulsion de l'invention, et son procédé de préhension et de levage associé.
La figure 7B illustre un cinquième mode de réalisation d'un moyen de préhension et de levage combinés et simultanés d'un système de propulsion de l'invention, et son procédé de préhension et de levage associé.
La figure 8 illustre, en vue de dessus, un système de propulsion avec un moyen de préhension et de levage combinés et simultanés de l'invention.
La figure 9 représente, en vue de dessus, les différentes étapes permettant l'attelage de l'objet roulant au système de propulsion avec un moyen de préhension et de levage combinés et simultanés.
La figure 10 illustre une variante de réalisation d'un moyen de préhension et de levage combinés et simultanés d'un système de propulsion selon l'invention.
La figure 11a illustre une autre variante d'un moyen de préhension et de levage combinés et simultanés d'un système de propulsion selon l'invention, dans une position permettant la préhension d'une roue de l'objet roulant.
La figure 11b illustre une autre variante mode de réalisation d'un moyen de préhension et de levage combinés et simultanés d'un système de propulsion selon l'invention, en position intermédiaire.
La figure 12a illustre une configuration d'un mode de réalisation d'un moyen de préhension et de levage combinés et simultanés d'un système de propulsion selon l'invention, avec un dispositif de relevage, en position de repos.
La figure 12b illustre une configuration d'un mode de réalisation d'un moyen de préhension et de levage combinés et simultanés d'un système de propulsion selon l'invention, avec un dispositif de relevage, en position de repos représentée en pointillés et en position relevée représentée en trait continu.
La figure 13 illustre l'effort à appliquer au moyen de préhension et de levage combinés et simultanés et l'élévation de la roue de l'objet roulant, en fonction du déplacement appliqué, pour un premier mode de réalisation du système comprenant un seul basculeur.
La figure 14 illustre l'effort à appliquer au moyen de préhension et de levage combinés et simultanés et l'élévation de la roue de l'objet roulant, en fonction du déplacement appliqué, pour un deuxième mode de réalisation du système comprenant deux basculeurs.
La figure 15 illustre l'effort à appliquer au moyen de préhension et de levage combinés et simultanés et l'élévation de la roue de l'objet roulant, en fonction du déplacement appliqué, pour un troisième mode de réalisation du système comprenant deux basculeurs et un dispositif de limitation du débattement angulaire d'un des deux basculeurs.
La figure 16 illustre une variante de réalisation d'un moyen de préhension et de levage combinés et simultanés d'un système de propulsion selon l'invention.
La figure 17 est une vue de dessus d'un système de propulsion électrique comprenant deux moyens de préhension et de levage combinés et simultanés de l'invention.

### Description des modes de réalisation

L'invention concerne un système de propulsion électrique amovible pour un objet roulant. On appelle système de propulsion électrique un système amovible permettant d'assister le déplacement de l'objet roulant, afin de limiter les efforts requis pour le déplacement de l'objet roulant. Ce système de propulsion électrique comporte au moins une machine électrique pour son entraînement. Un objet roulant est un objet qui comporte au moins deux roues afin de le déplacer.

L'objet roulant peut être de toute forme, notamment un lit roulant, tel que notamment ceux utilisés dans les hôpitaux, un fauteuil roulant, un chariot, tel qu'utilisé pour la logistique, par exemple la logistique hospitalière ou la logistique commerciale (selon un exemple un chariot de supermarché), tout meuble roulant. Un tel objet roulant comporte au moins deux roues, de préférence trois ou quatre. Avantageusement, au moins une roue, de préférence, deux roues de l'objet roulant sont des roues folles, en d'autres termes ce sont des roues décentrées orientables autour d'un axe vertical. L'objet roulant est de préférence non motorisé.

Le système de propulsion électrique selon l'invention comporte :
- Un châssis muni d'au moins une roue motorisée, c'est-à-dire une roue entraînée par une machine électrique, et au moins une roue non motorisée, c'est-à-dire non entraînée par une machine électrique. De préférence, le châssis comprend au moins deux roues non motorisées. Par l'exemple, une roue motorisée peut être placée à une extrémité du châssis et deux roues non motorisées peuvent être placées à l'autre extrémité du châssis, l'axe vertical de la roue motorisée étant de préférence placé sur la médiatrice des axes verticaux des roues non motorisées en vue de dessus.
- Au moins un moyen d'attelage du système de propulsion à un objet roulant, le moyens d'attelage comportent au moins un moyen de préhension et de levage combinés et simultanés d'au moins une roue de l'objet roulant, de préférence de deux roues de l'objet roulant. En d'autres termes, le moyen de préhension et de levage combinés et simultanés est configuré pour simultanément agripper (saisir) et lever au moins une roue de l'objet roulant, de préférence deux roues de l'objet roulant. On entend par un moyen de préhension et de levage combinés et simultanés, un moyen permettant simultanément de prendre et lever au moins une roue de l'objet roulant par une action combinée à l'aide d'un seul actionneur tel qu'un vérin. Le moyen de préhension et de levage combinés et simultanés ne comprend donc qu'une seule commande permettant simultanément la préhension et le levage d'au moins une roue de l'objet roulant. Autrement dit, un tel moyen de préhension et de levage combinés et simultanés se distingue :
   ∘ d'une part, des moyens de préhension et de levage comportant deux commandes distinctes : l'une pour la préhension et l'autre pour le levage ; ces moyens ne permettant pas une action combinée par une seule commande commune.
   ∘ d'autre part, des moyens de préhension et de levage prévus pour des actions successives de préhension et de levage.

L'utilisation d'un moyen de préhension et de levage combinés et simultanés est particulièrement avantageuse. En effet, par une action combinée de préhension et de levage, la cinématique d'attelage de l'objet roulant au système de propulsion est simplifiée. De plus, cette simplification associée à la simultanéité des actions de préhension et de levage permet de réaliser l'attelage plus rapidement qu'en dissociant ces actions, même partiellement.

Un tel moyen de préhension et de levage combinés et simultanés permet ainsi un attelage simple et rapide de n'importe quel objet roulant (puisqu'aucun dispositif d'attelage n'est nécessaire sur l'objet roulant) sur le système de propulsion.

De plus, comme le moyen de préhension et de levage combinés et simultanés n'utilise qu'un seul moyen de commande (un seul actionneur notamment) pour réaliser simultanément et de manière combinée la préhension et le levage d'au moins une roue de l'objet roulant, le coût associé aux moyens de commandes et aux actionneurs est réduit. Lorsque le système de propulsion comprend plusieurs moyens de préhension et de levage combinés et simultanés, le système de propulsion peut comprendre un unique moyen de commande pour chaque moyen de préhension et de levage combinés et simultanés. Par exemple, si le système de propulsion comprend deux moyens de préhension et de levage combinés et simultanés, chacun permettant la préhension et le levage d'une roue distincte de l'objet roulant, le système peut comprendre deux moyens de commande (deux vérins par exemple), un unique moyen de commande pour chaque moyen de préhension et de levage combinés et simultanés. Ainsi, le coût du système de propulsion est limité et les opérations de préhension et le levage des roues de l'objet roulant sont simples et rapides.

Les roues non entraînées du système de propulsion, la roue entraînée du système de propulsion et/ou celles de l'objet roulant peuvent comprendre des roues décentrées orientables.

Par roues décentrées orientables, on entend des roues folles décentrées et orientables autour d'un axe vertical. En d'autres termes, ces roues peuvent pivoter par rapport au châssis autour d'un axe d'orientation verticale, et l'axe de rotation de la roue est décentré (non concourant) par rapport à l'axe d'orientation verticale. Ainsi, un mouvement appliqué au châssis tend à orienter la roue dans la direction opposée au déplacement issu du mouvement appliqué au châssis. Les roues s'orientent donc de manière automatique, facilitant ainsi la manoeuvrabilité du système.

De préférence, le système de propulsion électrique peut comporter un guidon, permettant la manipulation, le déplacement et l'orientation du système de propulsion électrique par un utilisateur.

L'attelage de l'objet roulant au système de propulsion est réalisé par au moins une roue de l'objet roulant, de préférence par au moins une roue folle de l'objet roulant. L'objet roulant ne nécessite donc pas d'être adapté pour le système de propulsion électrique, ce qui rend le système de propulsion électrique universel à différents objets roulants. De préférence, l'attelage de l'objet roulant au système de propulsion peut être réalisé par deux roues de l'objet roulant, ce qui simplifie le procédé d'attelage et le moyen d'attelage associé.

Dans la suite de la description, les termes « longitudinaux », « transversaux », « horizontaux » et « verticaux » déterminent les axes et/ou directions du système lorsque le système est posé sur un sol plan et de niveau (c'est-à-dire sur un sol sans pente, en d'autres termes, il n'y a pas de différences d'altitude sur le sol) et en situation de fonctionnement.

La direction longitudinale correspond à la direction principale de déplacement du système de propulsion électrique.

La direction transversale (également appelée latérale dans la suite de la description) est la direction orthogonale à la direction longitudinale du système dans le plan horizontal.

La direction verticale est orthogonale au plan horizontal du système.

Selon une mise en oeuvre préférée de l'invention, le moyen d'attelage comprend deux moyens de préhension et de levage combinés et simultanés, chacun d'entre eux étant prévu pour lever au moins une roue de l'objet roulant, les deux moyens de préhension et de levage combinés et simultanés étant reliés entre eux par un actionneur linéaire(un vérin par exemple) permettant de rapprocher ou d'éloigner par une translation (de préférence transversale) des moyens de préhension et de levage combinés et simultanés l'un de l'autre. L'actionneur permet une translation relative (par exemple une translation transversale) de l'un des moyens de préhension et de levage combinés et simultanés par rapport à l'autre. De ce fait, le système peut s'adapter à différents empattements (espacements) des roues de l'objet roulant. De plus, en ramenant ou en éloignant les moyens de préhension et de levage combinés et simultanés l'un vers l'autre, on peut faciliter la montée des roues de l'objet roulant dans le système.

Selon une mise en oeuvre du système de l'invention, le moyen de préhension et de levage combinés et simultanés peut comprendre au moins un jeu de deux éléments de saisie (et de levage) dont les axes principaux sont sensiblement perpendiculaires à la direction longitudinale du châssis, les deux éléments de saisie étant adaptés pour saisir et lever, simultanément, deux roues de l'objet roulant par une seule commande telle qu'une commande de déplacement transversal (translation transversale) des éléments de saisie. Ces deux éléments de saisie permettent par un déplacement transversal par exemple de saisir et lever deux roues de l'objet roulant, une roue dans chaque élément de saisie.

Selon une mise en oeuvre de l'invention, le moyen de préhension et de levage combinés et simultanés comprend au moins un bâti connecté au châssis et au moins un élément basculant (un basculeur par exemple) apte à supporter la roue de l'objet roulant. Un élément basculant est un élément apte à basculer autour d'un axe. Un élément basculant est un basculeur. Un basculeur comprend notamment deux parties planes reliées rigidement entre elles et formant un angle ouvert non nul, l'axe de rotation du basculeur étant positionné au niveau de la liaison entre les deux parties planes du basculeur de manière à former un coude. Ainsi, le basculeur peut être une pièce coudée. Ainsi, les deux parties planes du basculeur servent à faire basculer (ou pivoter) le basculeur autour de son axe de rotation, dans un sens ou dans l'autre, et ce sans avoir recours à un actionneur pour générer le basculement. En d'autres termes, le basculeur est apte à générer le basculement du basculeur par le seul déplacement (translation) de la roue de l'objet roulant vers le basculeur, sans actionneur. Cela permet d'approcher au moins une des deux parties du basculeur du sol ou au contraire d'assurer une garde suffisante entre les deux parties du basculeur et le sol.

Le bâti peut être relié à au moins un élément basculant par une première liaison pivot d'axe sensiblement horizontal. De ce fait, le mouvement combiné de préhension et de levage de la roue de l'objet roulant peut être réalisé par basculement de l'élément basculant. Ce mouvement combiné peut être actionné par exemple par un mouvement de translation appliqué ou transmis à au moins la première liaison pivot d'axe horizontal, le mouvement de translation étant dirigé vers la roue de l'objet roulant, par exemple, selon une direction transversale. Ce mouvement de translation peut par exemple être appliqué par un vérin hydraulique, pneumatique ou électrique ou être mis en oeuvre manuellement par l'utilisateur.

L'élément basculant est apte à basculer autour de son axe de rotation par le mouvement de la roue de l'objet roulant vers l'élément basculant, sans nécessiter un actionneur pour générer le basculement. Ainsi, le système est simple et fiable.

Avantageusement, l'élément basculant au repos est à une distance minimale non nulle avec le sol, de manière à assurer une garde minimale et à éviter ainsi que l'élément basculant ne gêne le déplacement du chariot.

De préférence, le moyen de préhension et de levage combinés et simultanés peut comprendre au moins deux éléments basculants, les éléments basculants étant reliés entre eux, deux à deux, par des axes sensiblement horizontaux et parallèles entre eux, ces axes étant également parallèles à la première liaison pivot reliant l'un des éléments basculants au bâti. Ainsi, la multiplication des éléments basculants permet de réduire les efforts nécessaires pour initier le mouvement de préhension et de levage de la roue de l'objet roulant dans le moyen de préhension et de levage combinés et simultanés. Ainsi, l'effort nécessaire pour prendre et lever les roues de l'objet roulant est réduit. Le coût du système peut ainsi être réduit et l'énergie nécessaire au système est réduite. La masse du système peut également être réduite.

Avantageusement, lorsque le moyen de préhension et de levage combinés et simultanés comprend au moins deux éléments basculants, des pièces de butées peuvent être positionnées sur au moins un des éléments basculants pour permettre l'appui de l'autre élément basculant sur celui-ci, notamment lorsque le moyen de préhension et de levage combinés et simultanés est en position relevée.

De préférence, le moyen de préhension et de levage combinés et simultanés peut comprendre au moins un dispositif de limitation du débattement angulaire d'au moins un élément basculant. Le dispositif de limitation du débattement angulaire peut notamment limiter le débattement angulaire d'au moins un élément basculant. De ce fait, l'effort pour initier le mouvement de préhension et de levage des roues de l'objet roulant peut être réduit. En quelque sorte, le dispositif de limitation de débattement angulaire agit de manière similaire à l'ajout d'un élément basculant dans le système. Le dispositif de débattement angulaire facilite ainsi la préhension et la levée initiale de la roue de l'objet roulant.

Avantageusement, le moyen de préhension et de levage combinés et simultanés peut comprendre au moins une pièce de maintien d'au moins un élément basculant en position relevée. Par position relevée, on entend la position finale du moyen de préhension et de levage combinés et simultanés lorsque la roue de l'objet roulant est saisie et levée dans le moyen de préhension et de levage combinés et simultanés. La pièce de maintien peut être par exemple une butée, de préférence dans un matériau souple tel que le caoutchouc, de manière à éviter les chocs avec l'élément basculant. La pièce de maintien permet de soutenir l'élément basculant ou la roue lorsqu'il est en position relevée.

Selon une configuration de l'invention, le moyen de préhension et de levage combinés et simultanés peut comprendre un élément guide pour orienter la roue de l'objet roulant dans une direction proche de la direction sensiblement perpendiculaire à la direction longitudinale, c'est-à-dire sensiblement transversale, du châssis du système de propulsion, avant la saisie et la levée de la roue de l'objet roulant. En d'autres termes, lorsqu'on approche le système de propulsion de l'objet roulant, au moins une des roues de l'objet roulant, de préférence deux, vient en contact de l'élément guide qui permet de guider la roue de l'objet roulant pour la pré-orienter en direction du moyen de préhension et de levage combinés et simultanés, par exemple de l'élément basculant et/ou du bâti. Pour se faire, l'élément guide est sensiblement orthogonal à l'axe de rotation de l'élément basculant. En orientant la roue de l'objet roulant dans une direction sensiblement transversale, le déplacement (translation) dans la direction longitudinale entre le système de propulsion et l'objet roulant est limité, ce qui permet d'immobiliser l'objet roulant au système de propulsion avant et pendant la phase d'attelage. De plus, orienter les roues de l'objet roulant dans une direction sensiblement transversale permet de pré-orienter ces roues vers les éléments de saisie, placés dans la direction transversale (par exemple avec l'axe de rotation de l'élément basculant dans la direction longitudinale) et ainsi faciliter la préhension et la levée des roues de l'objet roulant. Avantageusement, la position de l'élément guide peut être réglée, par exemple dans la direction longitudinale de manière à s'adapter à différentes roues d'objet roulants, différents diamètres de roues, différents types de roues simples ou jumelées, etc...

Selon un mode de réalisation de l'invention, au moins un élément basculant peut comprendre une pièce guide pour orienter la roue de l'objet roulant dans l'élément basculant comprenant la pièce guide. Cette pièce guide peut notamment comprendre une partie formant un angle non nul, de préférence entre 5 et 30° par rapport aux extrémités de l'élément basculant (aux extrémités perpendiculaires à l'axe de rotation de ces éléments basculants). Lorsque l'axe de l'élément basculant est sensiblement longitudinal, la pièce guide comprend une partie formant un angle non nul, par rapport aux extrémités longitudinales de l'élément basculant s'étendant dans la direction transversale. En d'autres termes, la pièce guide comprend une partie qui, dans le plan horizontal, s'étend dans une direction formant un angle non nul avec la direction transversale. Ainsi, la roue de l'objet roulant, qui se positionne dans le moyen de préhension et de levage combinés et simultanés, vient en contact de la pièce guide, après avoir été éventuellement pré-orientée par l'élément guide, par au moins cette partie inclinée (dans le plan horizontal par rapport à la direction transversale). Le contact entre cette partie inclinée et la roue va permettre de guider la roue dans la direction souhaitée, la direction sensiblement transversale par exemple. L'élément guide pré-oriente la roue de l'objet roulant en direction des éléments de saisie, avant le contact de la roue de l'objet roulant avec ces éléments de saisie, puis la pièce guide permet de finaliser l'orientation de la roue de l'objet roulant dans l'élément de saisie (élément basculant et/ou bâti par exemple) de manière à faciliter la préhension et le levage.

Selon une variante de l'invention, au moins un élément basculant peut comprendre un moyen de réglage de la largeur de l'élément basculant. Ainsi, la largeur de l'élément basculant peut être adaptée à la largeur de la roue de l'objet roulant. L'élément basculant avec le moyen de réglage de la largeur permet une adaptation aux roues simples et aux roues jumelées. Les roues simples sont composées d'une seule roue autour d'un axe horizontal de rotation. Les roues jumelées sont composées de deux roues tournant autour d'un même axe de rotation horizontal. Le moyen de réglage de la largeur de l'élément basculant permet d'améliorer la préhension et le levage des roues de l'objet roulant, ainsi que leur immobilisation, le moyen de réglage de la largeur de l'élément roulant permettant de limiter le jeu entre la roue de l'objet roulant et l'élément basculant.

Par largeur de l'élément basculant, on entend la distance entre les extrémités de l'élément basculant, les extrémités s'étendant le long de l'axe de rotation de l'élément basculant. Par exemple, lorsque l'axe de l'élément basculant est sensiblement longitudinal, la largeur de l'élément basculant est la distance, selon la direction longitudinale, des extrémités de l'élément basculant. La largeur de l'élément basculant s'adapte ainsi à la largeur de la roue, qui peut être une roue simple ou jumelée.

Préférentiellement, le moyen de réglage de la largeur de l'élément basculant peut être un flasque mobile. Un flasque mobile est une pièce, par exemple une plaque ou un morceau de plaque, mobile en translation dans la direction de l'axe de l'élément basculant. Ainsi, l'utilisateur peut positionner le flasque à la largeur adaptée à la roue de l'objet roulant.

Selon une autre variante, le moyen de réglage de la largeur de l'élément basculant peut être une cale. De ce fait, la cale peut être mise en place ou retirée de l'élément basculant. Un jeu de cales peut être utilisé, de manière à s'adapter à différentes largeurs de roues de l'objet roulant. La cale peut être amovible.

Selon un mode de réalisation préféré de l'invention, le moyen de préhension et de levage combinés et simultanés est configuré pour réaliser simultanément la préhension et le levage d'au moins deux roues de l'objet roulant. Ainsi, un mouvement de translation peut permettre de déplacer les éléments de saisie (les éléments basculants et/ou le bâti par exemple) vers les roues de l'objet roulant. En rapprochant les éléments de saisie des roues de l'objet roulant, on facilite simultanément la préhension et le levage des deux roues de l'objet roulant.

De préférence, les au moins deux roues de l'objet roulant peuvent être positionnées sur un axe sensiblement transversal au système de propulsion électrique. Ainsi, un actionneur tel qu'un vérin, positionné dans la direction transversale, peut permettre de déplacer les éléments de saisie (bâti et/ou éléments basculants par exemple) vers les roues de l'objet roulant et ainsi faciliter leur saisie et leur levage. Cela peut permettre d'utiliser un seul actionneur pour prendre et lever simultanément deux roues de l'objet roulant.

Selon une autre variante de l'invention, le système de propulsion électrique peut comprendre deux moyens de préhension et de levage combinés et simultanés, chaque moyen de préhension et de levage combinés et simultanés comprenant un actionneur. Le système a alors deux actionneurs, deux vérins par exemple. Chaque actionneur est relié d'une part au châssis et d'autre part à un élément de saisie du moyen de préhension et de levage combinés et simultanés dont il fait partie. L'utilisation de deux vérins, chaque vérin étant connecté d'une part au châssis et à un moyen de préhension et de levage combinés et simultanés différent est particulièrement avantageuse, par rapport à l'utilisation d'un seul et unique vérin permettant d'éloigner deux moyens de préhension et de levage combinés et simultanés l'un de l'autre. En effet, utiliser deux vérins permet d'obtenir une longueur d'écartement importante tout en conservant un encombrement réduit et compact et un système léger. De plus, cela permet une vitesse d'écartement des moyens de préhension et de levage combinés et simultanés plus élevée.

De manière avantageuse, le moyen de préhension et de levage combinés et simultanés peut comprendre au moins un moyen de déplacement dans la direction transversale du moyen de préhension et de levage combinés et simultanés, la direction transversale étant orthogonale à la direction longitudinale. Un moyen de déplacement dans la direction transversale peut notamment être un actionneur linéaire tel qu'un vérin et permet de déplacer l'élément de saisie (bâti et/ou éléments basculants par exemple) vers la roue de l'objet roulant. Ainsi, l'utilisateur n'a pas besoin de pousser le système de propulsion vers l'objet roulant. La préhension et le levage de la roue de l'objet roulant est donc facilitée. De plus, lorsque le moyen de préhension et de levage combinés et simultanés est configuré pour saisir et lever simultanément deux roues de l'objet roulant, un seul moyen de déplacement permet de saisir et lever simultanément les deux roues de l'objet roulant, sans effort pour l'utilisateur. En effet, le déplacement des éléments de saisie l'un vers l'autre par exemple permet de prendre et lever les roues de l'objet roulant par l'extérieur. A l'inverse, le déplacement des éléments de saisie vers le sens opposé permet de prendre et lever les roues de l'objet roulant par l'intérieur.

De manière avantageuse, le moyen de préhension et de levage combinés et simultanés peut comprendre une première butée pour immobiliser l'objet roulant. Cette première butée peut notamment comprendre du caoutchouc ou un matériau équivalent. Cette première butée peut être positionnée sur le bâti et venir en contact avec la roue de l'objet roulant, lorsque la préhension et la levée de la roue de l'objet roulant sont finalisées, de manière à éviter le contact de la roue de l'objet roulant avec le bâti.

Selon une mise en oeuvre avantageuse, le moyen de préhension et de levage combinés et simultanés peut comprendre un dispositif de relevage configuré pour garantir une garde au sol supérieure à une hauteur prédéterminée, par exemple 40 mm, par exemple en position relevée. En effet, en position repos du moyen de préhension et de levage, la position repos étant définie par la position du moyen de préhension et de levage combinés et simultanés libre de tout mouvement et donc ne supportant aucune roue, au moins une partie de l'élément de saisie (l'élément basculant par exemple) peut être proche du sol pour faciliter la préhension et le levage de la roue de l'objet roulant. Cette position est donc avantageuse pour faciliter l'attelage mais elle est particulièrement gênante lorsqu'on veut manipuler le système de propulsion, sans être attelé à un objet roulant, par exemple lorsqu'un utilisateur utilise le système de propulsion en mode trottinette, debout sur une plateforme supportée par le châssis, car la garde au sol est alors très limitée. Ainsi, en position repos, le système de propulsion risque de se bloquer, de s'arrêter régulièrement dès qu'un petit obstacle apparaît. De plus, cette faible garde au sol risque d'entraîner des dommages au moyen de préhension et de levage combinés et simultanés. C'est pour cette raison, qu'un dispositif de relevage peut être prévu. Le dispositif de relevage permet de relever (remonter) les éléments de saisie (éléments basculants par exemple), sans qu'une roue de l'objet roulant soit saisie et levée, de manière à augmenter la garde au sol. Une garde au sol de 40 mm minimum par exemple permet de conserver un système compact et facile d'utilisation et de limiter les risques de blocage du système et les dommages. Ce dispositif de relevage est également avantageux pour utiliser le système de propulsion en mode trottinette de manière à éviter une chute de l'utilisateur.

De manière avantageuse, le dispositif de relevage peut comprendre au moins un ressort de rappel et/ou au moins un contrepoids et/ou au moins une tige entraînée.

Un ressort de rappel peut permettre de ramener un élément basculant par exemple en position relevée, dès que le système n'est pas attelé à un objet roulant. Le rappel en position relevée est alors automatique.

Un contrepoids, positionné sur un élément basculant par exemple du côté opposé à celui s'approchant du sol en position repos (sans le contrepoids) peut permettre de ramener naturellement la position repos à une position proche de la position relevée.

Une tige entraînée par un vérin, un actionneur linéaire entraîné par un moteur ou tout autre système d'entraînement, peut également permettre de déplacer les éléments de saisie vers le haut de manière à augmenter la garde au sol.

De manière préférée, le moyen de préhension et de levage combinés et simultanés peut comprendre un moyen de réglage en position longitudinale. En d'autres termes, on peut déplacer le moyen de préhension et de levage combinés et simultanés sur le châssis le long de l'axe longitudinal. Cela permet notamment de pouvoir s'approcher de la roue de l'objet roulant, de manière à faciliter les opérations d'attelage. Le moyen de réglage en position longitudinale peut notamment comprendre un actionneur linéaire tel qu'un vérin hydraulique, pneumatique ou électrique qui joue le rôle de glissière longitudinale.

Selon un mode de réalisation de l'invention, le moyen d'attelage peut comprendre deux moyens de préhension et de levage combinés et simultanés, l'un étant configuré pour saisir et lever au moins une roue de l'objet roulant orientée dans la direction transversale et l'autre étant configuré pour saisir et lever au moins une roue de l'objet roulant (de préférence deux roues de l'objet roulant) orientée dans une direction longitudinale. De ce fait, le système de propulsion électrique est adapté pour le levage d'objets roulants ayant des roues orientables, tel qu'un lit roulant, roues qui peuvent être orientées dans la direction transversale et il est adapté pour le levage d'objets roulants ayant des roues non orientables comme les roues arrière de fauteuils roulants, qui peuvent alors être saisies dans le deuxième moyen de préhension et de levage combinés et simultanés, dans la direction longitudinale. Ainsi, l'adaptabilité du système est plus grande.

Le premier moyen de préhension et de levage combinés et simultanés (celui qui saisit et lève les roues de l'objet roulant dans la direction transversale) peut correspondre à l'une des différentes caractéristiques décrites précédemment dans cette description.

De préférence, le deuxième moyen de préhension et de levage combinés et simultanés (celui qui saisit et lève les roues de l'objet roulant dans la direction longitudinale peut comprendre un cadre (un deuxième bâti), au moins un bras extensible dans une direction prédéterminée (longitudinale ou transversale par exemple) connecté au cadre, au moins un troisième élément basculant et au moins un dispositif de poussée. Le troisième élément basculant et le dispositif de poussée peuvent être l'un connecté audit bras extensible et l'autre connecté au cadre. Par exemple, le troisième élément basculant peut être connecté au cadre (par une liaison pivot d'axe transversal par exemple) et le dispositif de poussée peut être connecté (fixé par exemple) au bras extensible. Alternativement, le troisième élément basculant peut être connecté au bras extensible (par une liaison pivot d'axe transversal par exemple) et le dispositif de poussée peut être connecté (fixé par exemple) au cadre.

Le dispositif de poussée est apte à pousser au moins une roue de l'objet roulant selon la direction longitudinale dans le troisième élément basculant. Lorsque le dispositif de poussée est positionné sur le bras extensible, un mouvement longitudinal du bras extensible pousse la roue vers puis dans le troisième élément basculant. Lorsque le dispositif de poussée est positionné sur le cadre, le mouvement longitudinal du bras extensible est transmis au troisième élément basculant. Dans ce cas, le dispositif de poussée agit pour empêcher la roue de poursuivre son mouvement longitudinal. Ainsi, le dispositif de poussée pousse (par un effort appliqué par la roue de l'objet roulant sur le dispositif de poussée) la roue dans le troisième élément basculant. De ce fait, le troisième élément basculant et le dispositif de poussée sont en face l'un de l'autre le long d'une direction longitudinale.

De plus, le troisième élément basculant est apte à basculer autour d'un axe de direction sensiblement transversale.

Ainsi, par un mouvement du bras extensible dans la direction prédéterminée (longitudinale ou transversale par exemple) et orienté vers le cadre, il est possible de pousser la roue de l'objet roulant, grâce au dispositif de poussée, dans le troisième élément basculant. De plus, à partir du contact de la roue avec le troisième élément basculant, la poursuite de l'action du bras extensible permet de saisir et de lever la roue de l'objet roulant dans le troisième élément basculant. Le troisième élément basculant peut être conçu pour basculer de manière automatique sous l'effet des efforts de la roue de l'objet roulant et de son déplacement dans la direction prédéterminée. De ce fait, le troisième élément basculant ne dispose d'aucun moyen de commande de basculement.

Selon cette configuration, le troisième élément basculant peut être relié au cadre ou au bras extensible par une liaison pivot dans une direction sensiblement transversale. De ce fait, le troisième élément basculant peut basculer autour de cet axe transversal lorsque la roue de l'objet roulant se déplace dans la direction longitudinale.

Le troisième élément basculant peut notamment être un basculeur. Un basculeur selon l'invention comprend une pièce coudée en deux parties, cette pièce coudée étant en liaison pivot autour d'un axe, de préférence de direction transversale, autour duquel il peut basculer. Les deux parties de la pièce coudée se joignent sensiblement au niveau de l'axe transversal servant de pivot. En d'autres termes, le coude du basculeur se trouve au niveau de l'axe transversal. La roue de l'objet roulant vient en contact d'abord avec une des deux parties sur un premier point de contact, bascule autour du premier point de contact et vient ensuite au contact d'un deuxième point de contact sur l'autre partie du basculeur. Le déplacement longitudinal de la roue, poussée par le dispositif de poussée déplace le centre de gravité de l'ensemble, par rapport à l'axe de pivot transversal et fait basculer l'ensemble autour de cet axe de pivot.

Le cadre peut être relié au châssis soit par une fixation soit par une liaison glissière. La fixation au châssis peut notamment être utilisée lorsqu'on envisage de prendre une seule roue de l'objet roulant (un tricycle par exemple). La liaison glissière permet un degré d'adaptation du système amélioré pour pouvoir prendre deux roues de l'objet roulant.

Par l'exemple, une roue motorisée peut être placée à une extrémité longitudinale du châssis et deux roues non motorisées peuvent être placées à l'autre extrémité longitudinale du système de propulsion, sur le bras extensible, l'axe vertical de la roue motorisée étant de préférence placé, en vue de dessus, sur la médiatrice des axes verticaux des roues non motorisées en vue de dessus. De ce fait, la médiatrice des axes verticaux s'étend dans la direction longitudinale du châssis (et du système de propulsion).

L'invention concerne aussi un attelage comprenant un objet roulant et un système de propulsion électrique tel que décrit précédemment, ledit objet roulant étant attelé au système de propulsion électrique par les moyens d'attelage. Un tel attelage permet de faciliter les manoeuvres de l'objet roulant, notamment dans un environnement restreint, ainsi que de faciliter les opérations d'attelage et de dés-attelage.

L'invention concerne encore un procédé pour atteler un objet roulant au système de propulsion électrique décrit précédemment. Ce procédé comprend notamment les étapes suivantes :
a) on déplace longitudinalement le système de propulsion électrique et/ou le moyen de préhension et de levage combinés et simultanés (par exemple avec le moyen de réglage en position longitudinale) de manière à approcher le moyen de préhension et de levage d'au moins une roue de l'objet roulant,
b) on déplace le moyen de préhension et de levage combinés et simultanés ou le système de propulsion électrique dans la direction transversale pour permettre le contact entre la roue de l'objet roulant et le moyen de préhension et de levage combinés et simultanés ; lorsque le système est configuré pour saisir et lever simultanément deux roues de l'objet roulant, on peut déplacer les éléments de saisie vers les roues de l'objet roulant, les déplacements des éléments de saisie étant en direction opposée l'un par rapport à l'autre, ce déplacement entraînant la préhension et la levée des deux roues, sans que l'utilisateur n'ait besoin de bloquer le déplacement du lit ou du système de propulsion.
c) on continue le déplacement dans la direction transversale pour permettre la préhension et le levage combinés et simultanés d'au moins une roue de l'objet roulant, le déplacement appliqué entraînant la préhension et le levage de la roue de l'objet roulant dans le moyen de préhension et de levage combinés et simultanés.

De préférence, avant le contact de la roue avec l'élément basculant, on peut pré-orienter la roue de l'objet roulant par l'élément guide du moyen de préhension et de levage combinés et simultanés.

De manière avantageuse, après cette pré-orientation, lorsque la roue de l'objet roulant est en contact avec l'élément basculant, on peut finaliser l'orientation de la roue de l'objet roulant dans l'élément basculant par la pièce guide.

Selon une mise en oeuvre avantageuse, on peut simultanément prendre et saisir deux roues de l'objet roulant de manière à faciliter les opérations d'attelage de l'objet roulant au système de propulsion, par le déplacement (transation) en sens opposé des deux éléments de saisie, ces déplacements pouvant être générés par un seul actionneur commun aux deux éléments de saisie.

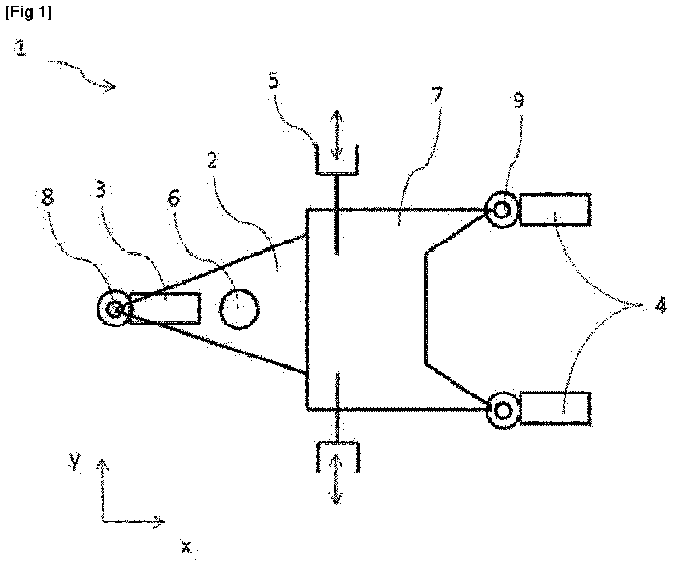

La figure 1 illustre, schématiquement et de manière non limitative, un système de propulsion électrique 1 selon un mode de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2 (l'axe z non représenté est vertical). Le châssis 2 supporte trois roues (alternativement le châssis 2 peut comprendre quatre roues). Le châssis 2 supporte, à l'une de ses extrémités longitudinales, une roue 3 (alternativement le châssis 2 peut supporter deux roues 3), qui est une roue entraînée par une machine électrique (non représentée). La roue 3 est orientable par rapport au châssis 2, autour d'un axe vertical 8. A l'autre extrémité longitudinale du châssis, le châssis 2 supporte deux roues 4, qui sont deux roues non entraînées par une machine électrique. Ces deux roues 4 sont des roues décentrées orientables autour d'axes verticaux 9. Le système de propulsion électrique 1 comprend en outre des moyens d'attelage 5.

Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 comprennent des moyens de préhension et de levage combinés et simultanés, représentés de manière simplifiée en tant que pinces. Le déplacement en translation latérale des moyens d'attelage 5 est indiqué par une double flèche. Ce déplacement latéral peut servir à la préhension, au levage et à l'orientation des roues de l'objet roulant. Les moyens d'attelage 5 sont placés, dans la direction x, entre la roue motorisée 3 et les roues décentrées orientables 4.

De plus, le système de propulsion électrique 1 comprend un guidon 6, par exemple sous la forme d'une tige équipée d'une poignée (non représentée).

En outre, le système de propulsion électrique 1 comporte une plateforme 7 de support (par exemple d'un utilisateur). La plateforme 7 est située à l'extrémité du châssis 2 qui supporte les roues non motorisées 4.

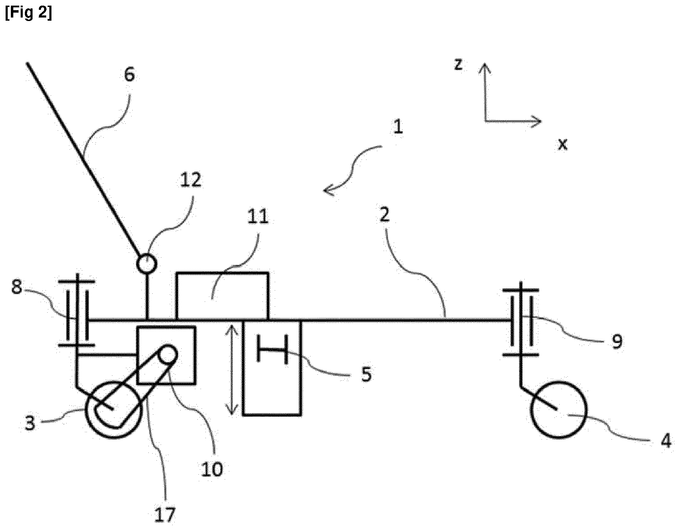

La figure 2 illustre, schématiquement et de manière non limitative, un système de propulsion électrique 1 selon une première variante de réalisation de l'invention. La figure 2 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2, l'axe y (non représenté) correspond à l'axe transversal. Le châssis 2 supporte trois roues. Le châssis 2 supporte une roue 3, qui est une roue entraînée par une machine électrique 10 au moyen d'un entraînement 17, par exemple une courroie ou une chaîne (alternativement la machine électrique 10 peut être reliée directement à la roue 3). La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont décentrées orientables par rapport au châssis 2 autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis 2 selon la direction latérale (axe y) afin de réaliser l'attelage au moyen de deux roues de l'objet roulant (non représenté). Les moyens d'attelage 5 sont représentés de façon simplifiée en tant que pinces. Le déplacement vertical des moyens d'attelage 5 est indiqué par une double flèche. Ce déplacement vertical des moyens d'attelage permet de manière combinée et simultanée la préhension et le levage des roues de l'objet roulant, ce déplacement vertical étant simultané et combiné au déplacement transversal des moyens d'attelage 5 de manière à générer simultanément la préhension et le levage des roues de l'objet roulant. Les moyens d'attelage 5 sont placés, dans la direction x, entre la roue motorisée 3 et les roues décentrées orientables 4.

De plus, le système de propulsion électrique 1 comprend un guidon 6 par exemple sous la forme d'une tige équipée d'une poignée (non représentée) reliée au châssis 2 par une articulation 12.

En outre, le système de propulsion électrique 1 comporte une batterie 11. La batterie 11 est placée sur le châssis 2 à proximité de la machine électrique 10 et de la roue motorisée 3.

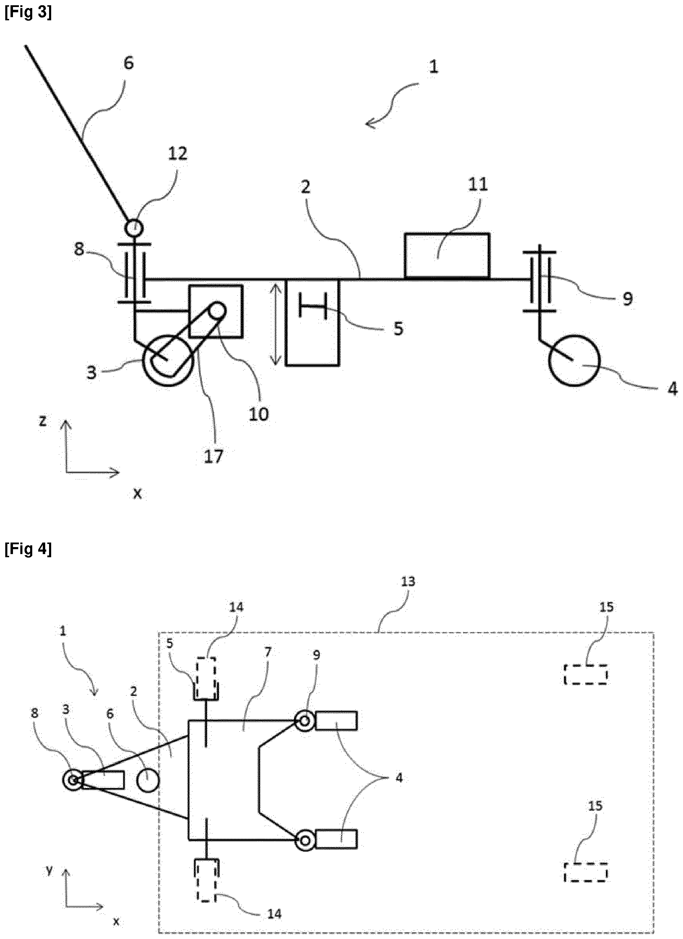

La figure 3 illustre, schématiquement et de manière non limitative, un système de propulsion électrique 1 selon une deuxième variante de réalisation de l'invention. La figure 3 est une vue de côté du système de propulsion électrique 1. Le système de propulsion électrique 1 comprend un châssis 2. L'axe x correspond à l'axe longitudinal du châssis 2 et à la direction principale de déplacement du système de propulsion, et l'axe z correspond à l'axe vertical du châssis 2. Le châssis 2 supporte trois roues. Le châssis 2 supporte une roue 3, qui est une roue entraînée par une machine électrique 10 au moyen d'un entraînement 17, par exemple une courroie ou une chaîne. La roue 3 est orientable par rapport au châssis 2, autour d'un axe vertical 8. La machine électrique 10 peut être solidaire du pivot 8 de la roue motorisée 3. A l'autre extrémité, le châssis 2 supporte deux roues 4, qui sont deux roues non entraînées par une machine électrique. Les roues 4 sont décentrées orientables par rapport au châssis autour d'axes verticaux 9.

Le système de propulsion électrique 1 comprend en outre des moyens d'attelage 5. Selon le mode de réalisation illustré, le système de propulsion électrique 1 comprend deux moyens d'attelage 5 de part et d'autre du châssis selon la direction latérale (axe y) afin de réaliser l'attelage au moyen de deux roues de l'objet roulant (non représenté). Les moyens d'attelage 5 comprennent des moyens de préhension et de levage combinés et simultanés, représentés de façon simplifiée en tant que pinces. Le déplacement (translation) vertical des moyens d'attelage 5 est indiqué par une double flèche. Ce déplacement vertical des moyens d'attelage permet de manière combinée et simultanée la préhension et le levage des roues de l'objet roulant. Ce déplacement vertical est entraîné par le déplacement transversal (translation transversale) des moyens de préhension et de levage combinés et simultanés, entraîné par un actionneur. Les moyens d'attelage 5 sont placés, dans la direction x, entre la roue motorisée 3 et les roues décentrées orientables 4.

De plus, le système de propulsion 1 comprend un guidon 6, par exemple sous la forme d'une tige équipée d'une poignée (non représentée) reliée à l'axe d'orientation verticale 8 de la roue motorisée 3 au moyen d'une articulation 12.

En outre, le système de propulsion électrique 1 comporte une batterie 11. La batterie 11 est placée sur le châssis 2 à proximité des roues non motorisées 4.

La figure 4 illustre, schématiquement et de manière non limitative, un système de propulsion électrique 1 selon un mode de réalisation de l'invention, attelé à un objet roulant 13. La figure 4 est une vue de dessus du système de propulsion électrique 1 et de l'objet roulant 13. Le mode de réalisation de la figure 4 correspond au mode de réalisation de la figure 1. L'objet roulant 13 peut être de tout type, notamment un lit roulant. L'objet roulant comprend deux roues 14, appelées arbitrairement roues arrières, et deux roues 15, appelées arbitrairement roues avant. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2. Le châssis supporte trois roues. Le châssis 2 supporte une roue 3, qui est une roue entraînée par une machine électrique (non représentée). La roue 3 est orientable par rapport au châssis 2, autour d'un axe vertical 8. A l'autre extrémité, le châssis 2 supporte deux roues 4, qui sont deux roues non entraînées par une machine électrique. Les roues 4 sont décentrées orientables par rapport au châssis 2 autour d'axes verticaux 9. Le système de propulsion électrique 1 comprend en outre des moyens d'attelage 5. Selon le mode de réalisation illustré, le système de propulsion électrique 1 comprend deux moyens d'attelage 5 de part et d'autre du châssis 2 selon la direction latérale (axe y) afin de réaliser l'attelage au moyen de deux roues arrière 14 de l'objet roulant 13. Les moyens d'attelage 5 comprennent des moyens de préhension et de levage combinés et simultanés, représentés de façon simplifiée en tant que pinces. Les roues arrière 14 de l'objet roulant 13 sont placées dans les moyens de préhension et de levage combinés et simultanés, et sont orientées selon l'axe y, c'est-à-dire selon un axe perpendiculaire à l'axe longitudinal (axe x) du châssis 2. De plus, les roues avant 15 de l'objet roulant sont libres et non attelées.

Le système de propulsion électrique 1 comprend également un guidon 6 par exemple sous la forme d'une tige équipée d'une poignée (non représentée) articulée par rapport au châssis 2.

En outre, le système de propulsion électrique 1 comporte une plateforme 7 de support (par exemple d'un utilisateur). La plateforme 7 est située à l'extrémité du châssis 2 qui supporte les roues non motorisées 4. Pour le mode de réalisation de la figure 4, les moyens d'attelage 5, les roues non motorisées 4, la plateforme 7, et une majeure partie du châssis 2 sont situées en-dessous de l'objet roulant. Seuls la roue motorisée 3 et le guidon 6 peuvent dépasser de l'objet roulant 13 dans la direction longitudinale x du châssis 2.

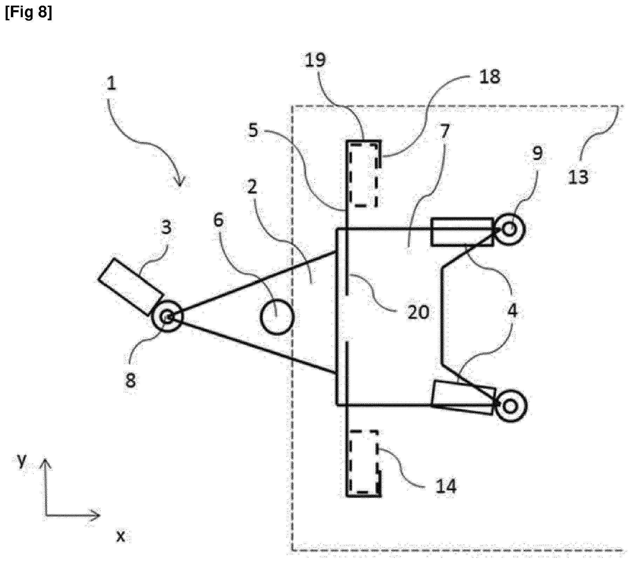

La figure 8 illustre (en vue de dessus), schématiquement et de manière non limitative, un exemple de réalisation d'un attelage d'un objet roulant (représenté par ces roues arrières 14) au système de propulsion 1. Les références correspondant aux références déjà utilisées correspondent aux mêmes éléments et ne seront pas redétaillés. Les moyens de préhension et de levage combinés et simultanés comprennent des branches d'immobilisation 19 qui sont disposées du côté extérieur du châssis 2 par rapport aux éléments de saisie 18. Par comparaison, sur les figures 1 et 4 par exemple, les éléments d'immobilisation sont représentés par le U situé du côté intérieur au châssis. Ainsi, dans l'exemple des figures 1 et 4, pour saisir et lever simultanément les deux roues 14 de l'objet roulant, les moyens de préhension et de levage combinés et simultanés se déplacent dans des directions opposées l'un à l'autre : le moyen de préhension et de levage combinés et simultanés situé en haut du schéma se déplace dans la direction y pour saisir et lever la roue 14 de l'objet roulant alors que le moyen de préhension et de levage combinés et simultanés situé en bas du schéma se déplace dans la direction opposée à y pour saisir et lever la roue 14 de l'objet roulant. Au contraire, sur la figure 8, pour saisir et lever les roues 14 de l'objet roulant, les moyens de préhension et de levage combinés et simultanés se déplacent l'un vers l'autre.

Dans l'exemple de la figure 8, les bras d'arrimage des moyens de préhension et de levage combinés et simultanés 20 sont rapprochés, l'un de l'autre (i.e., déplacés vers l'intérieur du châssis 2, par exemple au moyen de vérins), jusqu'à ce que les branches d'immobilisation 19 arrivent en contact puis en butée avec les roues 14 saisies. Dans cet exemple, le mouvement des roues non motorisées 4 de la structure est préférentiellement laissé libre.

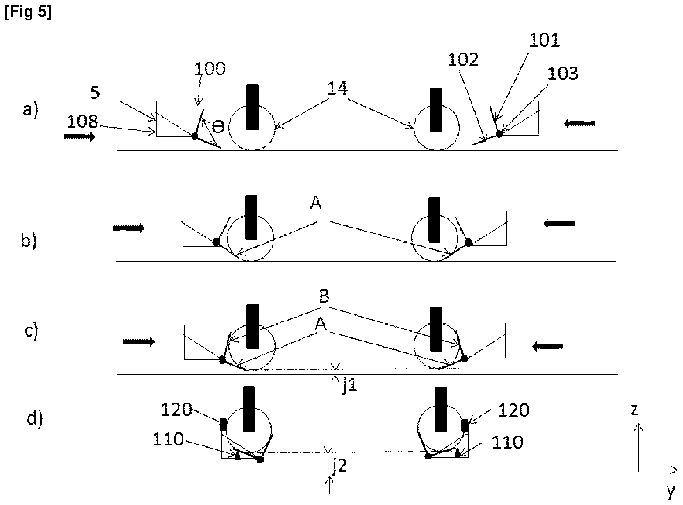

La figure 5 illustre, de manière schématique et non limitative, un premier mode de réalisation du moyen de préhension et de levage combinés et simultanés d'un système de propulsion selon l'invention.

Ce système de propulsion comprend des moyens d'attelage 5 avec des moyens de préhension et de levage combinés et simultanés. Ces moyens de préhension et de levage combinés et simultanés comprennent des éléments de saisie comprenant un bâti 108 qui est une structure ne pouvant pas se déplacer verticalement. Sur ce bâti 108, est fixé un élément basculant (un basculeur par exemple) 100. Cet élément basculant 100 est relié au bâti 108 par une liaison pivot 103 d'axe horizontal, ici selon la direction longitudinale, orthogonale au plan de coupe, la direction y représentant la direction transversale et la direction z représentant la direction verticale. L'élément basculant 100 comprend deux parties 101 et 102 planes fixées rigidement l'une à l'autre et formant un angle Θ non nul entre elles formant ainsi une pièce coudée. La liaison pivot 103 est avantageusement positionnée au niveau de la liaison entre les deux parties 101 et 102 qui forment l'angle ouvert Θ.

L'utilisation de parties planes 101 et 102 permet de simplifier la fabrication et de faciliter la montée de la roue de l'objet roulant.

La figure 5 illustre par quatre schémas a), b), c) et d) les différentes étapes pour l'accostage, la préhension et le levage de deux roues de l'objet roulant.

Lors de l'étape a), les deux roues 14 de l'objet roulant ne sont pas en contact avec les moyens de préhension et de levage combinés et simultanés. Elles sont notamment à distance des parties 102 de l'élément basculant 100, ces parties 102 étant à faible distance du sol pour faciliter la préhension et le levage des roues.

Les flèches noires représentent le déplacement (translation)appliqué aux moyens de préhension et de levage combinés et simultanés, l'un vers l'autre, en direction des roues 14 de l'objet roulant.

Lors de l'étape b), les moyens de préhension et de levage combinés et simultanés viennent au contact des roues 14 de l'objet roulant au point de contact A. Les parties 102 de support de roues entrent en contact des roues 14 de l'objet roulant.

En poursuivant le déplacement (translation) transversal des moyens de préhension et de levage combinés et simultanés l'un vers l'autre, la distance entre les deux roues 14 de l'objet roulant étant fixe, les parties 102 des éléments basculants 100 permettent simultanément de saisir les roues en impliquant une rotation de l'élément basculant 100 jusqu'à ce que le la roue soit en contact avec le l'élément basculant en A et B, et à amorcer leur levée au-dessus du sol, comme le montre le schéma c). En effet, un jeu j1 apparaît entre le bas des roues 14 de l'objet roulant et le sol, matérialisé sur les différents schémas par le trait horizontal continu. On observe également que l'élément basculant 100 a légèrement tourné autour de sa liaison pivot 103, la roue étant en contact de la partie de support de roue 102 au point de contact A et de l'autre partie 101 de l'élément basculant 100 au point de contact B.

En poursuivant le déplacement (translation) transversal des moyens de préhension et de levage combinés et simultanés l'un vers l'autre, comme la distance entre les roues 14 de l'objet roulant est fixe, chaque élément basculant 100 est entraîné en rotation autour de sa liaison pivot 103 par appui de chaque roue 14 de l'objet roulant dans l'élément basculant 100. Les moyens de préhension et de levage combinés et simultanés continuent à saisir et à lever les roues 14 de l'objet roulant jusqu'à la position finale représentée sur le schéma d) où le jeu j2 entre le bas de chaque roue 14 de l'objet roulant et le sol est maximal. A cette position finale, chaque roue 14 de l'objet roulant est immobilisée dans les moyens d'attelage 5 et est en appui, dans la direction transversale sur des premières butées 120 positionnées sur le bâti 108. De plus, une pièce de maintien 110 permet de maintien en position de l'élément basculant 100, dans cette position, dite position relevée, contre le bâti 108. Cette pièce de maintien 110, également positionnée sur le bâti 108 est située sous l'élément basculant 100 en position relevée. La pièce de maintien 110 permet de reprendre les efforts liés au poids de l'objet roulant sur les moyens de préhension et de levage combinés et simultanés, permettant de limiter la fatigue des éléments basculants 100.

La pièce de maintien 110 et/ou les premières butées 120 sont de préférence en matériau souple, comme du caoutchouc, de manière à éviter l'hyperstatisme d'une part et de manière à s'adapter à différents diamètres de roues d'autre part.

Ainsi, en imposant un seul mouvement de translation horizontal (flèche noire), on met en oeuvre de manière combinée et simultanée la préhension et le levage des roues de l'objet roulant.

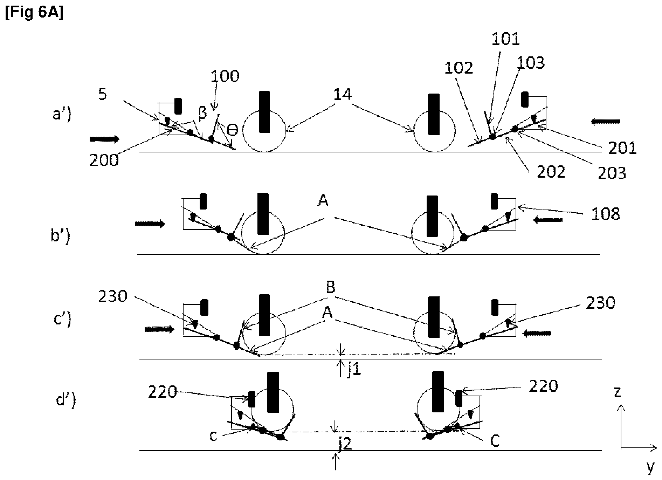

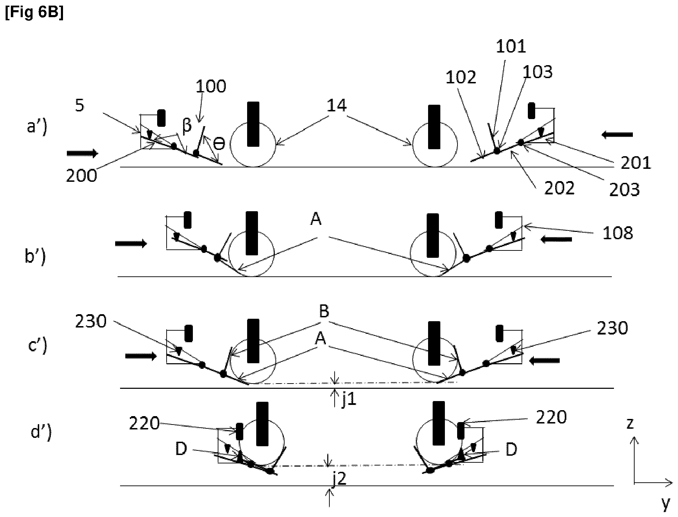

Les figures 6A et 6B illustrent, de manière schématique et non limitative, deux modes de réalisation d'un moyen de préhension et de levage combinés et simultanés d'un système de propulsion selon l'invention.

Sur ces figures, le système de propulsion comprend des moyens d'attelage 5 avec des moyens de préhension et de levage combinés et simultanés. Ces moyens de préhension et de levage combinés et simultanés comprennent des éléments de saisie comprenant un bâti 108 qui est une structure ne pouvant pas se déplacer verticalement. Sur ce bâti 108, est relié à un deuxième élément basculant (un basculeur par exemple) 200. Ce deuxième élément basculant 200 est relié au bâti 108 par une liaison pivot 203 d'axe horizontal, ici selon la direction longitudinale, orthogonale au plan de coupe, la direction y représentant la direction transversale et la direction z représentant la direction verticale. L'élément basculant 200, un basculeur par exemple, comprend deux parties 201 et 202 fixées rigidement l'une à l'autre et formant un angle β ouvert non nul entre elles formant une pièce coudée. La liaison pivot 203 est avantageusement positionnée au niveau de la liaison entre les deux parties 201 et 202 planes.

Ce deuxième élément basculant 200 est lui-même relié à un premier élément basculant 100 par un axe sensiblement horizontal 103 formant une liaison pivot entre les premier et deuxième éléments basculants 100 et 200. L'axe sensiblement horizontal 103 est dirigé selon la direction longitudinale (orthogonale au plan des schémas de la figure 6). Cet axe horizontal 103 est donc parallèle à la liaison pivot 203. L'axe horizontal 103 est avantageusement positionné à la liaison entre deux parties fixées 101 et 102 rigidement entre elles et formant un angle ouvert Θ non nul entre elles, formant ainsi une pièce coudée. Ainsi, l'élément basculant 100 peut notamment être un basculeur. La multiplication des éléments basculants permet de réduire l'effort nécessaire pour initier la préhension et le levage des roues 14 de l'objet roulant.

Les figures 6A et 6B illustrent par quatre schémas a'), b'), c') et d') les différentes étapes pour l'accostage, la préhension et le levage de deux roues de l'objet roulant.

Lors de l'étape a'), les deux roues 14 de l'objet roulant ne sont pas en contact des moyens de préhension et de levage combinés et simultanés. Elles sont notamment à distance des parties 102 du premier élément basculant 100, ces parties 102 étant à faible distance du sol pour faciliter la préhension et le levage des roues.

Les flèches noires représentent le déplacement (translation)appliqué aux moyens de préhension et de levage combinés et simultanés, l'un vers l'autre, en direction des roues 14 de l'objet roulant.

Lors de l'étape b'), les moyens de préhension et de levage combinés et simultanés viennent au contact des roues 14 de l'objet roulant au point de contact A. Les parties 102 de support de roues du premier élément basculant 100 entrent en contact des roues 14 de l'objet roulant.

En poursuivant le déplacement (translation) transversal des moyens de préhension et de levage combinés et simultanés l'un vers l'autre, la distance entre les deux roues 14 de l'objet roulant étant fixe, les parties 102 des premiers éléments basculants 100 permettent simultanément de saisir les roues en impliquant une rotation de l'élément basculant 100 jusqu'à ce que le la roue soit en contact avec le l'élément basculant en A et B, puis à amorcer leur levée au-dessus du sol, comme le montre le schéma c'). En effet, un jeu j1 apparaît entre le bas des roues 14 de l'objet roulant et le sol, matérialisé sur les différents schémas par le trait horizontal continu. On observe également que chaque premier élément basculant 100 a légèrement tourné autour de sa liaison pivot 103, la roue étant en contact de la partie de support de roue 102 au point de contact A et de l'autre partie 101 de chaque premier élément basculant 100 au point de contact B.

Sur la figure 6A, en poursuivant le déplacement (translation) transversal des moyens de préhension et de levage combinés et simultanés l'un vers l'autre, comme la distance entre les roues 14 de l'objet roulant est fixe, chaque premier élément basculant 100 est entraîné en rotation autour de sa liaison pivot 103 par appui de chaque roue 14 de l'objet roulant dans chaque premier élément basculant 100, chaque premier élément basculant 100 arrivant en contact contre une butée C positionnée sur l'élément basculant 200, entraînant alors le deuxième élément basculant 200 en rotation autour de sa liaison pivot 203.

Sur la figure 6B, en poursuivant le déplacement (translation) transversal des moyens de préhension et de levage combinés et simultanés l'un vers l'autre, comme la distance entre les roues 14 de l'objet roulant est fixe, chaque premier élément basculant 100 est entraîné en rotation autour de sa liaison pivot 103 par appui de chaque roue 14 de l'objet roulant dans chaque premier élément basculant 100, la roue 14 de l'objet roulant arrivant en contact contre une butée D positionnée sur l'élément basculant 200, entraînant alors le deuxième élément basculant 200 en rotation autour de sa liaison pivot 203. Cette configuration où la roue 14 de l'objet roulant arrive en contact contre une butée D de l'élément basculant 200 permet d'améliorer la répartition des efforts, comparativement à la solution de la figure 6A où l'élément basculant 100 arrive en contact de la butée C de l'élément basculant 200. En effet, dans cette configuration où la roue 14 arrive en contact sur la butée D, la roue 14 est alors en contact des points A, B et de la butée D au lieu d'être seulement en contact avec les points A et B.

Puis, aussi bien sur la figure 6A que sur la figure 6B, les moyens de préhension et de levage combinés et simultanés continuent à saisir et à lever les roues 14 de l'objet roulant jusqu'à la position finale représentée sur le schéma d') où le jeu j2 entre le bas de chaque roue 14 de l'objet roulant et le sol est maximal. A cette position finale, chaque roue 14 de l'objet roulant est immobilisée dans les moyens d'attelage 5 et est en appui, dans la direction transversale sur des premières butées 220 fixées sur le bâti 108. De plus, un dispositif de limitation de débattement angulaire 230 positionné sur le bâti 108 empêche un déplacement angulaire de la partie 201 du deuxième élément basculant 200 au-delà de ce dispositif de limitation de débattement angulaire 230. Sur les schémas a'), b') et c'), la partie 201 du deuxième élément basculant 200 est en contact du dispositif de débattement angulaire 230 qui joue donc son rôle de limitation de la rotation du deuxième élément basculant 200 autour de sa liaison pivot 203. Sur le schéma d'), la partie 201 du deuxième élément basculant 200 n'est plus en contact du dispositif de limitation de débattement angulaire 230.

Ainsi, en imposant un seul mouvement de translation horizontal (flèche noire), on met en oeuvre de manière combinée et simultanée la préhension et le levage des roues de l'objet roulant.

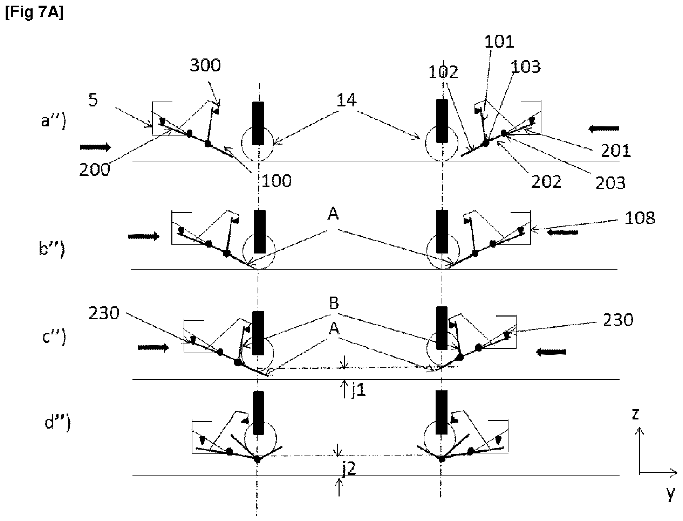

La figure 7A illustre, de manière schématique et non limitative, un autre mode de réalisation d'un moyen de préhension et de levage combinés et simultanés d'un système de propulsion selon l'invention.

Ce système de propulsion comprend des moyens d'attelage 5 avec des moyens de préhension et de levage combinés et simultanés. Ces moyens de préhension et de levage combinés et simultanés comprennent des éléments de saisie comprenant un bâti 108 qui est une structure ne pouvant pas se déplacer verticalement. Sur ce bâti 108, est fixé un deuxième élément basculant (un basculeur par exemple) 200. Ce deuxième élément basculant 200 est relié au bâti 108 par une liaison pivot 203 d'axe horizontal, ici selon la direction longitudinale, orthogonale au plan de coupe, la direction y représentant la direction transversale et la direction z représentant la direction verticale. L'élément basculant 200 comprend deux parties 201 et 202 fixées rigidement l'une à l'autre et formant un angle ouvert non nul entre elles. La liaison pivot 203 est avantageusement positionnée au niveau de la liaison entre les deux parties 201 et 202.

Ce deuxième élément basculant 200 est lui-même relié à un premier élément basculant 100 par un axe sensiblement horizontal 103 formant une liaison pivot entre les premier et deuxième éléments basculants 100 et 200. L'axe sensiblement horizontal 103 est dirigé selon la direction longitudinale (orthogonale au plan des schémas de la figure 7A). Cet axe horizontal est donc parallèle à la liaison pivot 203. L'axe horizontal 103 est avantageusement positionnée au niveau de la liaison entre les deux parties 101 et 102 planes reliées rigidement entre elles et formant un angle ouvert non nul, les deux parties 101 et 102 formant l'élément basculant 100, un basculeur par exemple. La multiplication des éléments basculants permet de réduire l'effort nécessaire pour initier la préhension et le levage des roues 14 de l'objet roulant.

Le système comprend également un dispositif de limitation du débattement angulaire 300 positionné sur le deuxième élément basculant 200, ici sur la partie 201 (alternativement sur la partie 202), pour limiter le débattement angulaire du premier élément basculant 100 autour de son axe de rotation 103.

La figure 7A illustre par quatre schémas a"), b"), c") et d") les différentes étapes pour l'accostage, la préhension et le levage de deux roues de l'objet roulant.

Lors de l'étape a"), les deux roues 14 de l'objet roulant ne sont pas en contact des moyens de préhension et de levage combinés et simultanés. Elles sont notamment à distance des parties 102 du premier élément basculant 100, ces parties 102 étant à faible distance du sol pour faciliter la préhension et le levage des roues.

Les flèches noires représentent le déplacement (translation) appliqué aux moyens de préhension et de levage combinés et simultanés, l'un vers l'autre, en direction des roues 14 de l'objet roulant.

Lors de l'étape b"), les moyens de préhension et de levage combinés et simultanés viennent au contact des roues 14 de l'objet roulant au point de contact A, tangent à la roue 14 de l'objet roulant. Les parties 102 de support de roues du premier élément basculant 100 entrent en contact des roues 14 de l'objet roulant.

En poursuivant le déplacement (translation) transversal des moyens de préhension et de levage combinés et simultanés l'un vers l'autre, la distance entre les deux roues 14 de l'objet roulant étant fixe, les parties 102 des premiers éléments basculants 100 permettent simultanément de saisir les roues et d'amorcer leur levée au-dessus du sol, comme le montre le schéma c"). En effet, les roues 14 roulent le long de la partie 102 de l'élément basculant jusqu'à ce que la roue soit en contact avec le point B de l'élément 101 un jeu j1 apparaît entre le bas des roues 14 de l'objet roulant et le sol, matérialisé sur les différents schémas par le trait horizontal continu. On observe également que contrairement au schéma c') des figures 6A et 6B, chaque premier élément basculant 100 n'a pas encore tourné autour de sa liaison pivot 103 alors que la levée des roues 14 de l'objet roulant a commencé. Cette absence de rotation au moment de la levée est liée à la présence du dispositif de limitation de débattement angulaire 300. Puis, la roue 14 de l'objet roulant entre en contact de la partie de support de roue 102 au point de contact A et de l'autre partie 101 de chaque premier élément basculant 100 au point de contact B.

En poursuivant le déplacement (translation) transversal des moyens de préhension et de levage combinés et simultanés l'un vers l'autre, comme la distance entre les roues 14 de l'objet roulant est fixe, chaque premier élément basculant 100 est entraîné en rotation autour de sa liaison pivot 103 par appui de chaque roue 14 de l'objet roulant dans chaque premier élément basculant 100, chaque premier élément basculant 100 entraînant le deuxième élément basculant 200 en rotation autour de sa liaison pivot 203. Des butées non représentées peuvent être prévues entre la roue et l'élément basculant 200 ou entre l'élément basculant 100 et l'élément basculant 200 pour permettre l'entraînement en rotation de l'élément basculant 200. Les moyens de préhension et de levage combinés et simultanés continuent à saisir et à lever les roues 14 de l'objet roulant jusqu'à la position finale représentée sur le schéma d") où le jeu j2 entre le bas de chaque roue 14 de l'objet roulant et le sol est maximal. A cette position finale, chaque roue 14 de l'objet roulant est immobilisée dans les moyens d'attelage 5 et est en appui, dans la direction transversale sur des premières butées (non représentées) positionnées sur le bâti 108. De plus, un deuxième dispositif de limitation de débattement angulaire 230 positionné sur le bâti 108 empêche un déplacement angulaire de la partie 201 du deuxième élément basculant 200 au-delà de ce dispositif de limitation de débattement angulaire 230. Sur les schémas a"), b") et c"), la partie 201 du deuxième élément basculant 200 est en contact du dispositif de débattement angulaire 230 qui joue donc son rôle de limitation de la rotation du deuxième élément basculant 200 autour de sa liaison pivot 203. Sur le schéma d"), la partie 201 du deuxième élément basculant 200 n'est plus en contact du dispositif de limitation de débattement angulaire 230.

Une telle configuration permet de maintenir un effort sensiblement constant pour saisir et lever la roue de l'objet roulant juste après son contact au point A et ce jusqu'à ce que la roue vienne au contact du point B.

Ainsi, en imposant un seul mouvement de translation horizontal (flèche noire), on met en oeuvre de manière combinée et simultanée la préhension et le levage des roues de l'objet roulant.

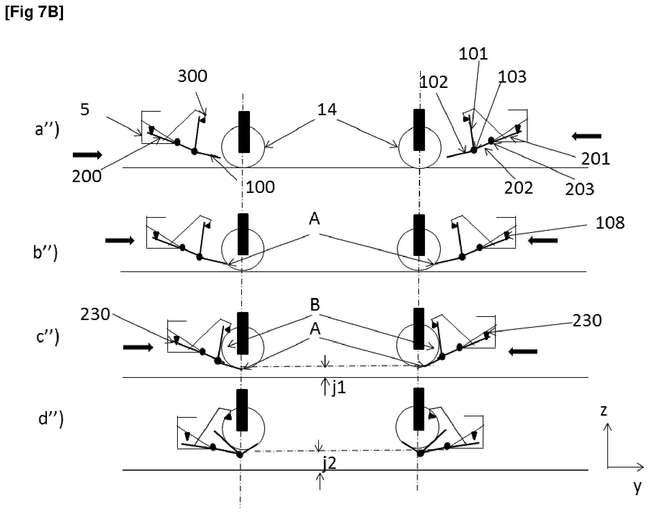

La figure 7B illustre, de manière schématique et non limitative, une autre variante de réalisation d'un moyen de préhension et de levage combinés et simultanés d'un système de propulsion selon l'invention.

Ce système de propulsion comprend des moyens d'attelage 5 avec des moyens de préhension et de levage combinés et simultanés. Ces moyens de préhension et de levage combinés et simultanés comprennent des éléments de saisie comprenant un bâti 108 qui est une structure ne pouvant pas se déplacer verticalement. Sur ce bâti 108, est fixé un deuxième élément basculant (un basculeur par exemple) 200. Ce deuxième élément basculant 200 est relié au bâti 108 par une liaison pivot 203 d'axe horizontal, ici selon la direction longitudinale, orthogonale au plan de coupe, la direction y représentant la direction transversale et la direction z représentant la direction verticale. L'élément basculant 200 comprend deux parties 201 et 202 fixées rigidement l'une à l'autre et formant un angle ouvert non nul entre elles. La liaison pivot 203 est avantageusement positionnée au niveau de la liaison entre les deux parties 201 et 202.

Ce deuxième élément basculant 200 est lui-même relié à un premier élément basculant 100 par un axe sensiblement horizontal 103 formant une liaison pivot entre les premier et deuxième éléments basculants 100 et 200. L'axe sensiblement horizontal 103 est dirigé selon la direction longitudinale (orthogonale au plan des schémas de la figure 7B). Cet axe horizontal est donc parallèle à la liaison pivot 203. L'axe horizontal 103 est avantageusement positionné au niveau de la liaison entre les deux parties 101 et 102 planes reliées rigidement entre elles et formant un angle ouvert non nul, les deux parties 101 et 102 formant l'élément basculant 100, un basculeur par exemple. La multiplication des éléments basculants permet de réduire l'effort nécessaire pour initier la préhension et le levage des roues 14 de l'objet roulant.

Le système comprend également un dispositif de limitation du débattement angulaire 300 positionné sur le deuxième élément basculant 200, ici sur la partie 201 (alternativement sur la partie 202), pour limiter le débattement angulaire du premier élément basculant 100 autour de son axe de rotation 103.

La figure 7B illustre par quatre schémas a"), b"), c") et d") les différentes étapes pour l'accostage, la préhension et le levage de deux roues de l'objet roulant.

Lors de l'étape a"), les deux roues 14 de l'objet roulant ne sont pas en contact des moyens de préhension et de levage combinés et simultanés. Elles sont notamment à distance des parties 102 du premier élément basculant 100, ces parties 102 étant à faible distance du sol pour faciliter la préhension et le levage des roues.

Les flèches noires représentent le déplacement (translation) appliqué aux moyens de préhension et de levage combinés et simultanés, l'un vers l'autre, en direction des roues 14 de l'objet roulant.

Lors de l'étape b"), les moyens de préhension et de levage combinés et simultanés viennent au contact des roues 14 de l'objet roulant au point de contact A, qui n'est pas tangent à la roue 14 de l'objet roulant, contrairement à la figure 7A. Les parties 102 de support de roues du premier élément basculant 100 entrent en contact des roues 14 de l'objet roulant.

En poursuivant le déplacement (translation) transversal des moyens de préhension et de levage combinés et simultanés l'un vers l'autre, la distance entre les deux roues 14 de l'objet roulant étant fixe, les parties 102 des premiers éléments basculants 100 permettent simultanément de saisir les roues et d'amorcer leur levée au-dessus du sol, comme le montre le schéma c"). En effet, les roues 14 de l'objet roulant basculent autour de la génératrice passant par le point A et orthogonale au plan de coupe, le point A n'étant pas tangent à la roue. Le basculement des roues 14 se poursuit jusqu'à ce que la roue soit en contact avec le point B de l'élément 101. En d'autres termes, la génératrice passant par le point A et orthogonale à au plan de coupe sert ici d'axe de rotation à la roue 14 de l'objet roulant. Un jeu j1 apparaît entre le bas des roues 14 de l'objet roulant et le sol, matérialisé sur les différents schémas par le trait horizontal continu. On observe également que contrairement au schéma c') des figures 6A et 6B, chaque premier élément basculant 100 n'a pas encore tourné autour de sa liaison pivot 103 alors que la levée des roues 14 de l'objet roulant a commencé. Cette absence de rotation au moment de la levée est liée à la présence du dispositif de limitation de débattement angulaire 300.

En poursuivant le déplacement (translation) transversal des moyens de préhension et de levage combinés et simultanés l'un vers l'autre, comme la distance entre les roues 14 de l'objet roulant est fixe, chaque premier élément basculant 100 est entraîné en rotation autour de sa liaison pivot 103 par appui de chaque roue 14 de l'objet roulant dans chaque premier élément basculant 100, chaque premier élément basculant 100 entraînant le deuxième élément basculant 200 en rotation autour de sa liaison pivot 203. Des butées (non représentées) peuvent être prévues entre la roue 14 et l'élément basculant 100 ou entre l'élément basculant 200 et l'élément basculant 100. Les moyens de préhension et de levage combinés et simultanés continuent à saisir et à lever les roues 14 de l'objet roulant jusqu'à la position finale représentée sur le schéma d") où le jeu j2 entre le bas de chaque roue 14 de l'objet roulant et le sol est maximal. A cette position finale, chaque roue 14 de l'objet roulant est immobilisée dans les moyens d'attelage 5 et est en appui, dans la direction transversale sur des premières butées (non représentées) positionnées sur le bâti 108. De plus, un deuxième dispositif de limitation de débattement angulaire 230 positionné sur le bâti 108 empêche un déplacement angulaire de la partie 201 du deuxième élément basculant 200 au-delà de ce dispositif de limitation de débattement angulaire 230. Sur les schémas a"), b") et c"), la partie 201 du deuxième élément basculant 200 est en contact du dispositif de débattement angulaire 230 qui joue donc son rôle de limitation de la rotation du deuxième élément basculant 200 autour de sa liaison pivot 203. Sur le schéma d"), la partie 201 du deuxième élément basculant 200 n'est plus en contact du dispositif de limitation de débattement angulaire 230.

L'effet de bascule de la roue juste après son contact au point A permet dans ce cas de diminuer l'effort utile à la saisie et à la levée de la roue et ce jusqu'à ce que la roue vienne en contact avec le point B.

Ainsi, en imposant un seul mouvement de translation horizontal (flèche noire), on met en oeuvre de manière combinée et simultanée la préhension et le levage des roues de l'objet roulant.

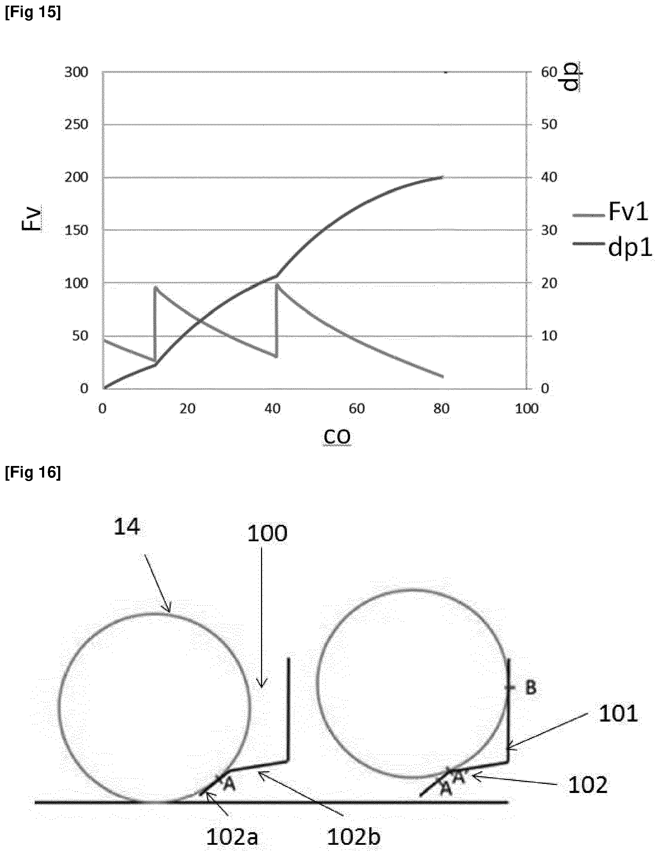

La figure 16 illustre, de manière schématique et non limitative, une variante des figures 7A et 7B. En effet, sur cette figure, l'élément basculeur 100 comprend une partie de support 102 et une deuxième partie 101.

La partie de support 102 comprend une partie 102a et une partie 102b. Lorsque la roue 14 arrive en contact de l'objet roulant comme représenté sur le schéma de gauche, la roue 14 vient au contact de la partie 102a au point de contact A, la roue 14 de l'objet roulant étant alors tangente à la partie 102a. La roue peut alors rouler sur la partie 102a jusqu'au point A' qui définit la liaison entre la partie 102a et la partie 102b. Au point A', la roue 14 de l'objet roulant bascule alors autour du point A' jusqu'à ce qu'elle vienne en contact du point B de la partie 101.

Cette configuration permet d'avoir un effort constant lorsque la roue roule sur la partie 102a, puis de faire diminuer l'effort utile à la saisie de la roue lorsque la roue bascule autour du point A' jusqu'à ce que la roue 14 vienne en contact avec point B.

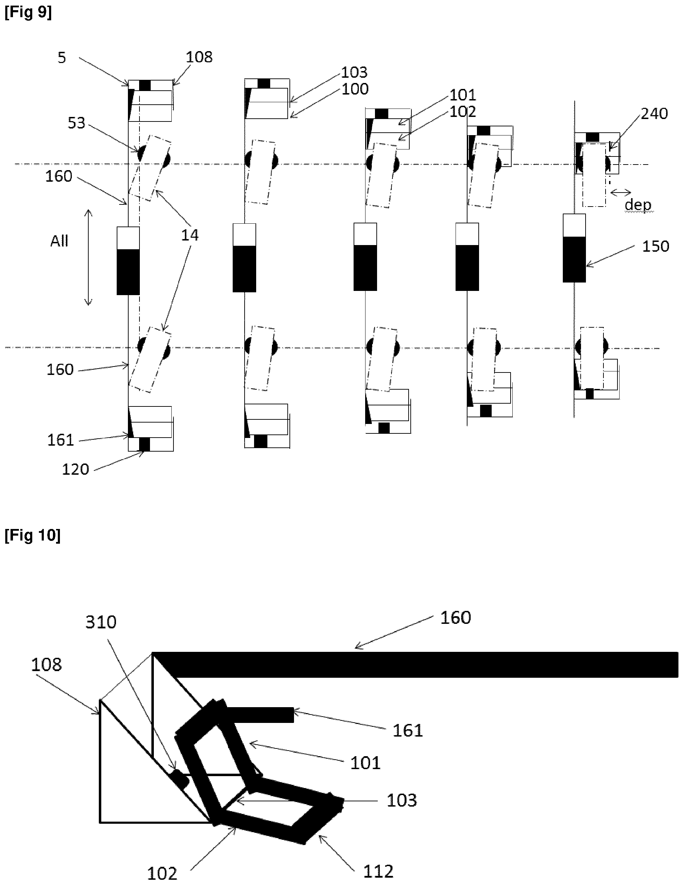

La figure 9 présente, de manière schématique et non limitative différentes phases d'accostage, de préhension et de levée de roues de l'objet roulant.

Le système comprend des moyens d'attelage 5 avec deux moyens de préhension et de levage combinés et simultanés reliés entre eux par un actionneur 150 tel qu'un vérin permettant de rapprocher ou d'éloigner les moyens de préhension et de levage combinés et simultanés.

Alternativement et sans sortir du cadre de l'invention, le système peut avantageusement comprendre deux actionneurs, chaque actionneur étant relié d'une part au châssis et d'autre part à un moyen de préhension et de levage combinés et simultanés, ce qui permet notamment d'assurer les longueurs de déplacement nécessaire et d'augmenter la vitesse d'éloignement des deux moyens de préhension et de levage combinés et simultanés l'un de l'autre.

Les schémas de gauche à droite représentent, peu à peu le rapprochement des moyens de préhension et de levage combinés et simultanés l'un vers l'autre de manière à saisir et lever les roues 14 de l'objet roulant dont l'écartement est fixe. Ces schémas sont représentés en vue de dessus. Le déplacement (translation) dans la direction transversale des moyens de préhension et de levage combinés et simultanés est représenté par la double flèche All.

Les moyens de préhension et de levage combinés et simultanés comprennent chacun un bâti 108, relié à l'actionneur 150. Un élément basculant 100 est relié au bâti 108 par une liaison pivot d'axe horizontal 103. L'élément basculant 100 est en deux parties 101 et 102 reliées rigidement l'une à l'autre, l'axe horizontal 103 étant positionné au niveau de la liaison rigide entre les deux parties 101 et 102.

Chaque roue 14 de l'objet roulant s'oriente autour d'un axe vertical 53 qui dépasse de chaque côté de la roue 14. Ainsi, sur le schéma le plus à gauche, lorsqu'on approche le système de propulsion électrique de l'objet roulant (ou l'inverse), la roue 14 vient au contact de l'élément guide 160 qui s'étend sensiblement dans la direction transversale. L'élément guide 160 fait alors pivoter la roue 14 autour de l'axe vertical 53 pour qu'elle s'oriente dans une direction proche de la direction transversale comme sur le deuxième schéma en partant de la gauche. La roue 14 n'est pas exactement dans la direction transversale car la partie de l'axe vertical 53 dépassant la roue 14 peut gêner et ainsi empêcher un positionnement dans la direction transversale de la roue 14 de l'objet roulant.

Sur le troisième schéma en partant de la gauche, la roue 14 de l'objet roulant vient en contact de l'élément basculant 100, notamment sur la partie 102 de l'élément basculant 100.

L'élément basculant 100 comprend une pièce guide 161 qui vient guider la roue 14 de l'objet roulant dans le moyen de préhension et de levage combinés et simultanés de manière à positionner la roue 14 dans une direction sensiblement transversale, perpendiculaire à la direction longitudinale du châssis. Pour cela, la pièce guide 161 comprend une partie inclinée formant un angle non nul avec la direction transversale en vue de dessus de manière à guider la roue 14 dans la direction souhaitée de manière douce en évitant les accrocs.

Entre le troisième et le cinquième schémas en partant de la gauche, on observe que la roue 14, guidée par la pièce guide 161, s'oriente peu à peu dans la direction transversale. Dans la position finale, sur le schéma de droite, la roue 14 de l'objet roulant est en contact d'une première butée 120 fixée sur le bâti 108.

En outre, un flasque mobile 240 peut être utilisé pour régler la largeur des éléments basculants 100 à la largeur de la roue 14 de l'objet roulant. Pour cela le flasque 240 peut se déplacer selon la direction longitudinale selon le déplacement dep, par exemple le long de la liaison pivot 103. En alternative, des cales pourraient être utilisées en lieu et place du flasque mobile, les cales étant amovibles.

La figure 10 illustre, de manière schématique et non limitative, une vue en perspective d'un premier mode de réalisation d'un moyen de préhension et de levage combinés et simultanés de l'invention.

Sur cette figure, le moyen de préhension et de levage combinés et simultanés comprend un élément guide 160, à l'extrémité duquel est fixé un bâti 108. Sur ce bâti, est positionné un élément basculant en deux parties 101 et 102, fixées rigidement entre elles et formant un angle non nul. De ce fait, l'élément basculant est coudé. En d'autres termes, l'élément basculant forme ici un basculeur. L'élément basculant est positionné sur le bâti du même côté que l'élément guide 160. L'élément basculant pivote autour d'une liaison pivot d'axe horizontal 103, relié au bâti, permettant la rotation de l'élément basculant par rapport au bâti, la liaison pivot 103 étant avantageusement positionnée au niveau de la liaison entre les deux parties 101 et 102 planes. L'élément basculant permet de réaliser simultanément et de manière combinée la préhension et le levage de la roue de l'objet roulant.

De plus, une pièce guide 161 positionnée sur l'élément basculant, du même côté que l'élément guide, permet d'orienter la roue dans l'élément basculant.

De plus, une pièce de maintien 310 permet de soutenir l'élément basculant, lorsqu'il supporte la roue de l'objet roulant de manière à améliorer la reprise des efforts et à limiter la fatigue de l'élément basculant. Cette pièce de maintien 310 peut avantageusement être positionnée au fond du bâti 108. Selon une variante, la pièce de maintien 310 positionnée sur le fond du bâti pourrait soutenir la roue 14 de l'objet roulant. La pièce de maintien 310 est avantageusement en matériau souple (un matériau qui peut se déformer de quelques millimètres au moins lorsque la roue ou l'élément basculant vient en contact), tel que du caoutchouc.

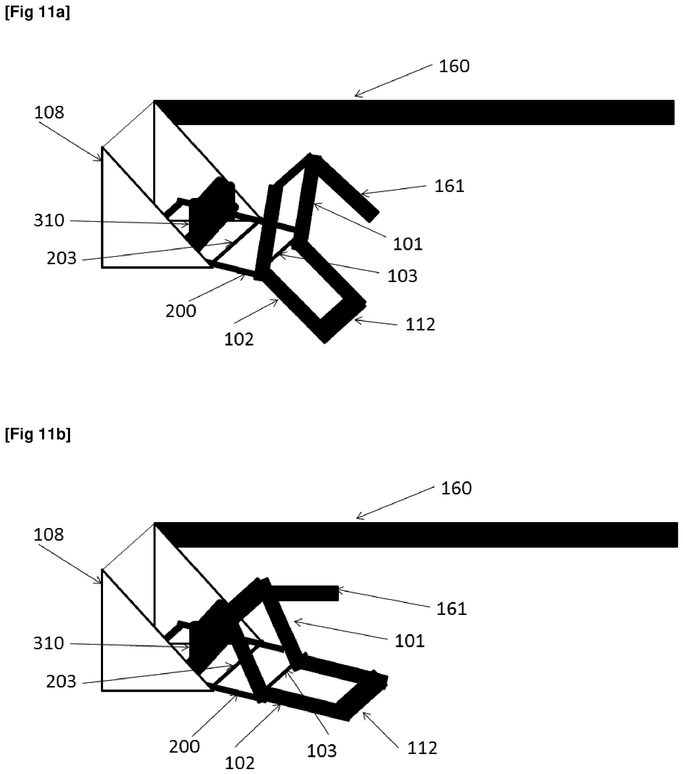

Les figures 11a et 11b illustrent, de manière schématique et non limitative, une vue en perspective d'un deuxième mode de réalisation d'un moyen de préhension et de levage combinés et simultanés de l'invention.

Sur ces figures, le moyen de préhension et de levage combinés et simultanés comprend un élément guide 160, à l'extrémité duquel est fixé un bâti 108. Sur ce bâti, est positionné un deuxième élément basculant 200 en deux parties fixées rigidement entre elles formant ainsi une pièce courée. Ce deuxième élément basculant 200 est positionné sur le bâti 108 du même côté que l'élément guide 160. Ce deuxième élément basculant 200 pivote autour d'une liaison pivot d'axe horizontal 203, reliée au bâti 108, permettant la rotation du deuxième élément basculant 200 par rapport au bâti 108. Un premier élément basculant en deux parties 101 et 102 planes reliées entre elles rigidement et formant ainsi une pièce coudée est connecté au deuxième élément basculant 200 par l'intermédiaire d'une deuxième liaison pivot d'axe horizontal 103, parallèle à la liaison pivot 203. Le premier élément basculant comprend une pièce support 112 qui entre en contact avec la roue de l'objet roulant. La pièce support 112 permet de supporter et de lever la roue de l'objet roulant, notamment au début de la saisie de la roue de l'objet roulant. Les premier et deuxième éléments basculants permettent de réaliser simultanément et de manière combinée la préhension et le levage de la roue de l'objet roulant.

De plus, une pièce guide 161 positionnée sur le premier élément basculant, du même côté que l'élément guide 160, permet d'orienter la roue dans l'élément basculant.

En outre, une pièce de maintien 310 permet de soutenir le premier élément basculant, lorsqu'il supporte la roue de l'objet roulant de manière à améliorer la reprise des efforts, à limiter la fatigue du premier élément basculant. De plus, cette pièce de maintien 310 peut permettre d'entraîner en rotation le second élément basculant 200. Selon une variante, la pièce de maintien 310 peut soutenir la roue de l'objet roulant et entraîner en rotation le second élément basculant 200.

Sur la figure 11a, le premier élément basculant est en position permettant le contact aisé avec la roue de l'objet roulant. Cela peut correspondre à la position de repos du moyen de préhension et de levage combinés et simultanés.

Sur la figure 11b, le premier élément basculant est en position intermédiaire où il a basculé autour de son axe horizontal 103, sans être encore en contact avec la pièce de maintien 310.

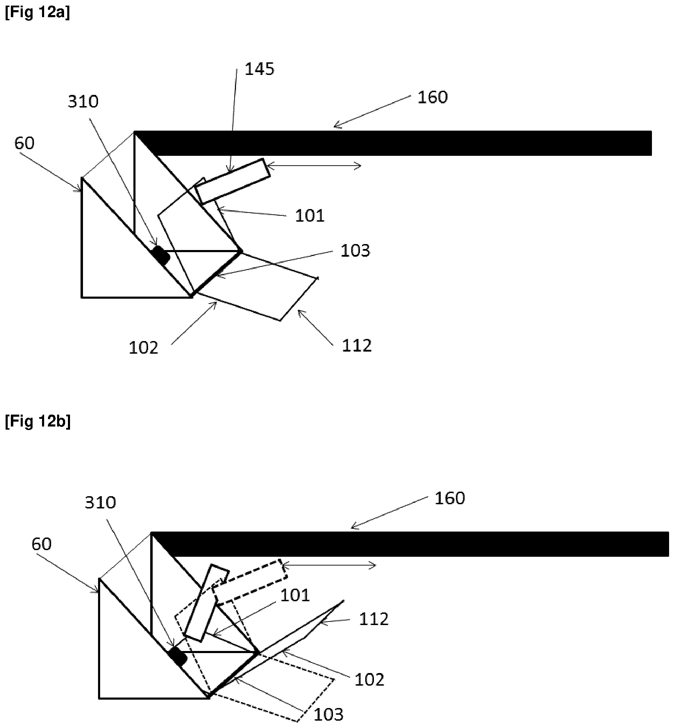

Les figures 12a et 12b illustrent, de manière schématique et non limitative, un mode de réalisation d'un dispositif de relevage d'un moyen de préhension et de levage combinés et simultanés selon l'invention.

Sur ces figures, le moyen de préhension et de levage combinés et simultanés comprend un élément guide 160, l'élément guide s'étendant dans la direction transversale, à l'extrémité duquel est fixé un bâti 108. Sur ce bâti 108, est positionné un élément basculant en deux parties 101 et 102, fixées rigidement entre elles et formant un angle ouvert non nul. L'élément basculant est positionné sur le bâti du même côté que l'élément guide 160. L'élément basculant pivote autour d'une liaison pivot d'axe horizontal 103, relié au bâti 108, permettant la rotation de l'élément basculant par rapport au bâti 108. L'élément basculant permet de réaliser simultanément la préhension et le levage de la roue de l'objet roulant. La liaison pivot 103 est avantageusement positionnée au niveau de la liaison entre les deux parties 101 et 102.

De plus, une pièce de maintien 310 permet de soutenir l'élément basculant, lorsqu'il supporte la roue de l'objet roulant de manière à améliorer la reprise des efforts et à limiter la fatigue de l'élément basculant. Il peut également permettre d'entraîner l'élément basculant 200 en rotation. Selon une variante, la pièce de maintien 310 peut soutenir la roue de l'objet roulant.

En outre, une came 145 est fixée rigidement sur l'élément basculant. Sur l'extrémité de la came 145 qui n'est pas fixée à l'élément basculant, un déplacement (translation) dans la direction transversale (parallèle à l'élément guide 160) peut être appliqué par exemple par une tige ou un vérin. Ce déplacement est représenté par la double flèche. Lorsqu'on déplace la came 145 en direction du bâti 108, la came 145 entraîne le relèvement de l'élément basculant. La garde au sol est alors augmentée. Au contraire, un déplacement de la came 145 en direction opposée au bâti 108 entraîne l'abaissement de l'élément basculant au plus près du sol, facilitant ainsi la préhension et le levage des roues de l'objet roulant. Le déplacement de la came 145 peut être avantageusement lié à un actionneur qui permet simultanément le relevage des éléments basculants de deux moyens de préhension et de levage combinés et simultanés opposés.

Alternativement ou en combinaison, un système à contrepoids pourrait être utilisé pour le relevage des éléments basculants.

La figure 12a représente l'élément basculant en position repos prêt à saisir et lever une roue de l'objet roulant.

Sur la figure 12b, la position repos est représentée en pointillés et la position relevée de l'élément basculant est représentée en trait continu. On observe ainsi que la partie 112 de support de la roue, qui est initialement le point le plus bas, est relevée et se trouve donc, en position relevée, au-dessus de la liaison pivot d'axe horizontal 103.

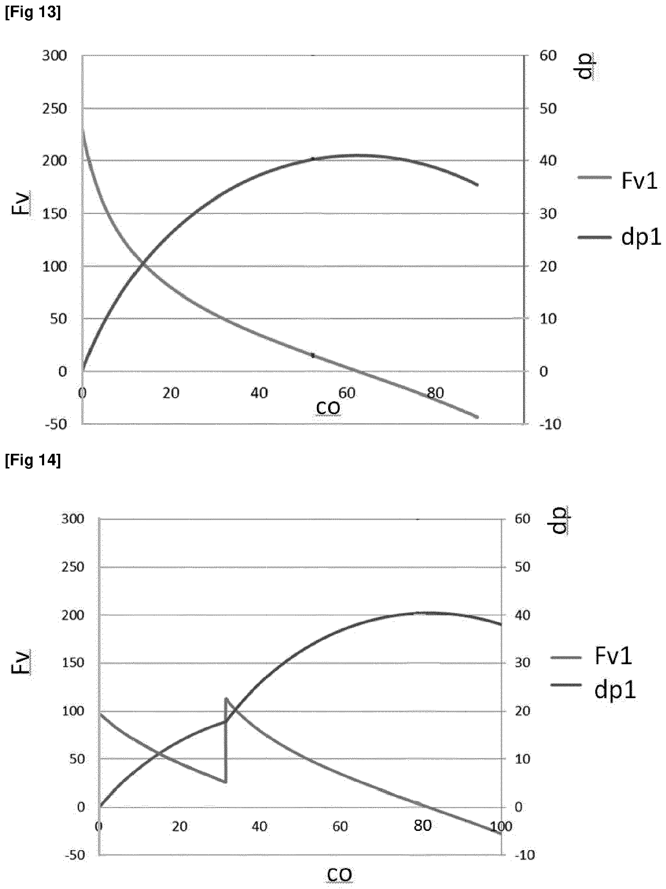

Les figures 13 à 15 représentent l'évolution de l'effort appliqué Fv par le ou les vérins au cours de la course co (dans la direction transversale) appliquée au moyen de préhension et de levage combinés et simultanés, le point initial de la course co correspondant au premier contact entre la roue de l'objet roulant et le premier élément basculant. La course co s'effectue dans la direction transversale du système de propulsion.

Ces figures montrent aussi l'élévation de la roue dp par rapport au sol au cours de la course co.

La courbe Fv1 montre l'évolution de l'effort appliqué et la courbe dp1 celle de l'élévation de la roue de l'objet roulant.

Les figures 13 à 15 représentent l'évolution de l'effort appliqué Fv1 et l'évolution de l'élévation de la roue de l'objet roulant pour trois modes de réalisation de moyens de préhension et de levage combinés et simultanés selon l'invention.

La figure 13 illustre le cas d'un système selon l'invention avec un seul élément basculant, la figure 14 illustre le cas d'un système selon l'invention avec deux éléments basculants et la figure 15 illustre le cas d'un système selon l'invention avec deux éléments basculants et un dispositif de limitation du débattement angulaire du premier élément basculant (celui qui entre en contact en premier avec la roue de l'objet roulant). Le système de la figure 13 correspond au mode de réalisation de la figure 5, celui de la figure 14 au mode de réalisation de la figure 6A et celui de la figure 15 au mode de réalisation de la figure 7B (la roue 14 basculant autour du point de contact A jusqu'à ce qu'elle vienne au contact du point B).

Ces figures correspondent à la préhension et à la levée d'un objet roulant d'un poids d'environ 400 N soit sensiblement 100 N par roue.

On observe que pour les trois systèmes, l'élévation de la roue est d'environ 40mm ce qui permet d'assurer une garde au sol suffisante, une fois le système attelé à l'objet roulant.

Par ailleurs, on observe que la multiplication des éléments basculants entre la figure 13 et la figure 14 permet de considérablement réduire l'effort maximal nécessaire (qui passe de plus de 200 N à moins de 120 N). Les efforts maximaux correspondent aux instants de premiers contacts avec chaque élément basculant.

Sur la figure 14, on observe une première partie où l'effort Fv1 diminue avant de brutalement remonter puis de diminuer à nouveau. Le moment de cette remontée brutale correspond au moment où le deuxième élément basculant tend à initier le mouvement de pivot autour de sa liaison pivot.

Sur la figure 15, on observe que l'ajout d'un dispositif de limitation de débattement angulaire a un effet similaire à celui d'ajouter un élément basculant. En effet, entre la figure 14 et la figure 15, l'effort maximal est passé d'environ 120 N à moins de 100 N. On observe également qu'à environ 15 mm de course co, l'effet de limitation de débattement angulaire crée une augmentation brutale de l'effort tout comme l'effet observé par l'ajout d'un élément basculant. En d'autres termes, le dispositif de limitation de débattement angulaire a un effet similaire à celui de l'ajout d'un élément basculant.

On observe aussi que l'ajout d'élément basculant et/ou de dispositif de limitation de débattement angulaire tend à créer des légers points de discontinuités sur les courbes dp1 liés au début de basculement des différents éléments basculants.

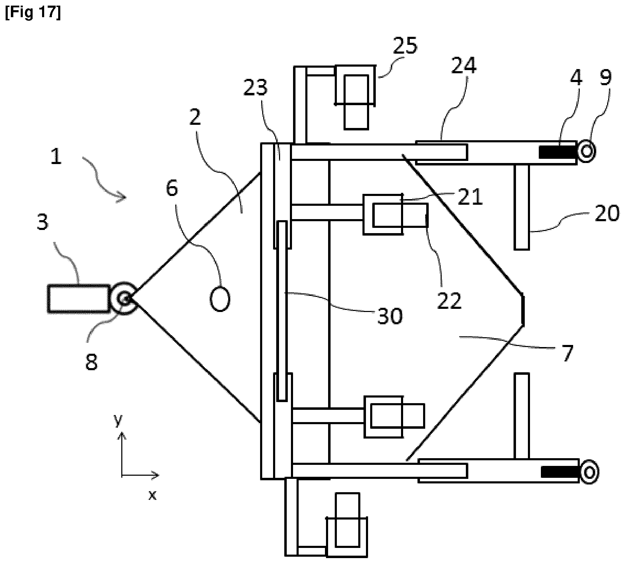

La figure 17 illustre, schématiquement et de manière non limitative, un système de propulsion électrique 1 selon un mode de réalisation de l'invention. La figure 1 est une vue de dessus du système de propulsion électrique 1. Le système de propulsion électrique 1 comprend un châssis 2. L'axe x correspond à l'axe longitudinal du châssis 2 et à la direction principale de déplacement du système de propulsion 1, et l'axe y correspond à l'axe latéral du châssis 2 (l'axe z non représenté est vertical). Le châssis 2 supporte, à l'une des extrémités longitudinales du système de propulsion électrique 1, une roue 3 (alternativement le châssis 2 peut supporter deux roues 3), qui est une roue entraînée par une machine électrique (non représentée). La roue 3 est orientable par rapport au châssis 2, autour d'un axe vertical 8. A l'autre extrémité longitudinale du système de propulsion électrique 1, le système de propulsion électrique comprend deux roues 4, qui sont deux roues non entraînées par une machine électrique. Ces deux roues 4 sont des roues décentrées orientables autour d'axes verticaux 9. Le système de propulsion électrique 1 comprend en outre des moyens d'attelage.

Selon le mode de réalisation illustré, le moyen d'attelage comprend deux moyens de préhension et de levage combinés et simultanés.

Le premier moyen de préhension et de levage combinés et simultanés 25 permet de saisir et lever simultanément deux roues de l'objet roulant qui sont orientées dans la direction perpendiculaire à l'axe longitudinale x, c'est-à-dire dans la direction transversale y.

Le deuxième moyen de préhension et de levage combinés et simultanés comprend deux parties, chacune de ces parties comprenant un cadre 23 et un élément basculant 22, tel qu'un basculeur, connecté au cadre 23 par une liaison pivot d'axe transversal 21. Chaque partie du deuxième moyen de préhension et de levage combinés et simultanés comprend également un dispositif de poussée 20 connecté à un bras extensible 24 dans la direction longitudinale. Le bras extensible 24 a donc une longueur variable dans la direction longitudinale. Une des extrémités de ce bras extensible 24 est fixée au cadre 23. Ainsi, le bras extensible 24 permet de raccourcir ou d'allonger la distance longitudinale entre le troisième élément basculant 22 et le dispositif de poussée 20 de manière à pouvoir positionner une roue de l'objet roulant entre ces deux pièces puis à pousser la roue dans le troisième élément basculant 22. Le bras extensible 24 peut notamment comprendre un vérin de manière à commander l'allongement ou le rétrécissement du bras extensible 24. Les roues non entraînées 4 sont montées par l'intermédiaire de l'axe vertical 9, au niveau de l'extrémité longitudinale opposée à l'extrémité reliée au cadre 23, de chacun des bras extensibles 24. Ainsi, la distance entre les roues non entraînées 4 et le châssis 2 peut varier. Le positionnement des roues non entraînées 4 sur le bras extensible 24 permet d'améliorer la reprise des efforts une fois l'objet roulant attelé au système de propulsion électrique 1.

De manière à assurer l'éloignement et le raccourcissement des cadre 23 l'un par rapport à l'autre (et ainsi d'assurer l'éloignement transversal des troisièmes éléments basculants 22 entre eux et des dispositifs de poussée 20 entre eux), les deux bâtis cadres sont reliés par une liaison glissière de direction transversale 30. Cette fonction peut par exemple être assurée par un vérin ou par une crémaillère. Le moyen d'attelage est placé, dans la direction x, entre la roue motorisée 3 et les roues décentrées orientables 4.

Le deuxième moyen de préhension et de levage combinés et simultanés permet simultanément de saisir et prendre deux roues de l'objet roulant qui sont orientées dans la direction longitudinale x.

De plus, le système de propulsion électrique 1 comprend un guidon 6, par exemple sous la forme d'une tige équipée d'une poignée (non représentée).

En outre, le système de propulsion électrique 1 peut comporter une plateforme 7 de support (par exemple d'un utilisateur).

Le système de propulsion de l'invention est notamment adapté à différents objets roulants, avec des écartements de roues différents, avec des diamètres de roues différents. Il permet donc une très grande variabilité d'utilisation.

## Revendications

1. Système de propulsion électrique amovible (1) pour un objet roulant (13), ledit système de propulsion (1) comprenant un châssis (2) muni d'au moins une roue entrainée (3) par une machine électrique (10) et d'au moins une roue non entraînée (4), ledit système de propulsion électrique (1) comprenant au moins un moyen d'attelage (5) dudit système de propulsion électrique (1) audit objet roulant (13), ledit moyen d'attelage (5) comprenant deux moyens de préhension et de levage combinés et simultanés (20) de roues (14) dudit objet roulant (13) reliés entre eux par un actionneur permettant de rapprocher ou d'éloigner les moyens de préhension et de levage combinés et simultanés, **caractérisé en ce qu'**au moins un desdits moyens de préhension et de levage combinés et simultanés (20) comprend au moins un bâti (108) connecté au châssis (2) et au moins un élément basculant (100) apte à supporter la roue (14) de l'objet roulant (13), ledit bâti (108) étant relié par une première liaison pivot (103) d'axe sensiblement horizontal à au moins un élément basculant (100), l'élément basculant (100) étant un basculeur, le basculeur comprenant deux parties planes (101, 102) reliées rigidement entre elles et formant un angle ouvert (θ) non nul, l'axe de rotation du basculeur étant positionné au niveau de la liaison entre les deux parties planes (101, 102) du basculeur de manière à former un coude, les deux parties planes (101, 102) du basculeur servant à faire basculer le basculeur autour de son axe de rotation, dans un sens ou dans l'autre, sans avoir recours à un actionneur pour générer le basculement.

2. Système selon la revendication 1, pour lequel au moins un desdits moyens de préhension et de levage combinés et simultanés (20) comprend au moins deux éléments basculants (100, 200), lesdits éléments basculants (100, 200) étant reliés entre eux, deux à deux, par des axes sensiblement horizontaux et parallèles (103, 203) entre eux.

3. Système selon l'une des revendications 1 à 2, pour lequel au moins un desdits moyens de préhension et de levage combinés et simultanés (20) comprend au moins un dispositif de limitation du débattement angulaire (230, 300) d'au moins un élément basculant (100, 200).

4. Système selon l'une des revendications 1 à 3, pour lequel au moins un desdits moyens de préhension et de levage combinés et simultanés (20) comprend au moins une pièce de maintien (110, 310) d'au moins un élément basculant (100, 200) en position relevée.

5. Système selon l'une des revendications 1 à 4, pour lequel au moins un élément basculant (100, 200) comprend une pièce guide (161) pour orienter la roue (14) de l'objet roulant (13) dans ledit élément basculant (100, 200) comprenant ladite pièce guide (161).

6. Système selon l'une des revendications 1 à 5, pour lequel au moins un élément basculant (100, 200) comprend un moyen de réglage (240) de la largeur dudit élément basculant (100, 200), ledit moyen de réglage (240) de la largeur dudit élément basculant (100, 200) étant de préférence un flasque mobile ou une cale.

7. Système selon l'une des revendications précédentes, pour lequel au moins un desdits moyens de préhension et de levage combinés et simultanés (20) est configuré pour réaliser simultanément la préhension et le levage d'au moins deux roues (14) de l'objet roulant (13), lesdites au moins deux roues (14) de l'objet roulant (13) étant de préférence positionnées sur un axe sensiblement transversal audit système de propulsion électrique (1).

8. Système selon l'une des revendications précédentes, pour lequel au moins un desdits moyens de préhension et de levage combinés et simultanés (20) comprend au moins un moyen de déplacement dans la direction transversale dudit moyen de préhension et de levage combinés et simultanés (20), la direction transversale étant orthogonale à la direction longitudinale (x), la direction longitudinale (x) étant la direction principale de déplacement dudit système de propulsion électrique amovible (1).

9. Système selon l'une des revendications précédentes, pour lequel au moins un desdits moyens de préhension et de levage combinés et simultanés (20) comprend un élément guide (160) pour orienter la roue (14) de l'objet roulant (13) dans une direction proche d'une direction sensiblement perpendiculaire à la direction longitudinale (x) dudit châssis (2) dudit système de propulsion (1), avant la saisie et la levée de ladite roue (14) de l'objet roulant (13).

10. Système selon l'une des revendications précédentes, pour lequel au moins un desdits moyens de préhension et de levage combinés et simultanés (20) comprend une première butée (120, 220) pour immobiliser l'objet roulant (13).

11. Système selon l'une des revendications précédentes, pour lequel au moins un desdits moyens de préhension et de levage combinés et simultanés (20) comprend un dispositif de relevage configuré pour garantir une garde au sol supérieure à un hauteur prédéfinie en position relevée, de préférence, la hauteur prédéfinie étant d'au moins 40mm.

12. Système selon la revendication 11, pour lequel le dispositif de relevage comprend au moins un ressort de rappel et/ou au moins un contrepoids et/ou au moins une tige entraînée.

13. Système selon l'une des revendications précédentes, pour lequel au moins un desdits moyens de préhension et de levage combinés et simultanés comprend un moyen de réglage en position longitudinale.

14. Système selon l'une des revendications précédentes, pour lequel ledit moyen d'attelage comprend deux moyens de préhension et de levage combinés et simultanés, un premier moyen de préhension et de levage combinés et simultanés (25) étant configuré pour saisir et lever au moins une roue de l'objet roulant orientée dans la direction transversale et un deuxième moyen de préhension et de levage combinés et simultanés étant configuré pour saisir et lever au moins une roue de l'objet roulant orientée dans une direction longitudinale.

15. Système selon la revendication 14, pour lequel ledit deuxième moyen de préhension et de levage combinés et simultanés comprend un cadre (23), au moins un bras extensible (24) dans une direction longitudinale (x) connecté au cadre (23), au moins un troisième élément basculant (22) et au moins un dispositif de poussée (20), ledit troisième élément basculant (22) et le dispositif de poussée (20) étant pour l'un connecté audit bras extensible (24) et pour l'autre connecté au cadre (23), ledit dispositif de poussée (20) étant apte à pousser au moins une roue de l'objet roulant selon ladite direction longitudinale (x) dans ledit au moins ledit troisième élément basculant (22), ledit troisième élément basculant (22) étant apte à basculer autour d'un axe de direction sensiblement transversale (21).

16. Attelage comprenant un objet roulant (13) et un système de propulsion électrique (1) selon l'une des revendications précédentes, ledit objet roulant (13) étant attelé audit système de propulsion électrique (1) par lesdits moyens d'attelage (5).

17. Procédé pour atteler un objet roulant (13) au système de propulsion électrique (1) selon l'une des revendications 1 à 15, comprenant les étapes suivantes :
a) on déplace longitudinalement le système de propulsion électrique (1) de manière à approcher au moins un desdits moyens de préhension et de levage combinés et simultanés (20) d'au moins une roue (14) de l'objet roulant (13),
b) on déplace le moyen de préhension et de levage combinés et simultanés (20) ou le système de propulsion électrique (1) dans la direction transversale pour permettre le contact entre la roue (14) de l'objet roulant (13) et le moyen de préhension et de levage combinés et simultanés (20) ; et
c) on continue le déplacement dans la direction transversale pour permettre la préhension et le levage combinés et simultanés d'au moins une roue (14) de l'objet roulant (13).

## Patentansprüche

1. Lösbares elektrisches Antriebssystem (1) für ein rollendes Objekt (13), wobei das Antriebssystem (1) ein Fahrgestell (2) umfasst, das mit mindestens einem von einer elektrischen Maschine (10) angetriebenen Rad (3) und mindestens einem nicht angetriebenen Rad (4) ausgestattet ist, wobei das elektrische Antriebssystem (1) mindestens ein Mittel zum Ankuppeln (5) des elektrischen Antriebssystems (1) an das rollende Objekt (13) umfasst, wobei das Ankupplungsmittel (5) zwei Mittel zum kombinierten und gleichzeitigen Greifen und Heben (20) von Rädern (14) des rollenden Objekts (13) umfasst, die miteinander durch einen Stellantrieb verbunden sind, welcher ermöglicht, die Mittel zum kombinierten und gleichzeitigen Greifen und Heben anzunähern oder zu entfernen, **dadurch gekennzeichnet, dass** wenigstens eines der Mittel zum kombinierten und gleichzeitigen Greifen und Heben(20) mindestens ein Gestell (108), das mit dem Fahrgestell (2) verbunden ist, und mindestens ein Schwenkelement (100), das geeignet ist, das Rad (14) des rollenden Objekts (13) zu tragen, umfasst, wobei das Gestell (108) durch eine erste Gelenkverbindung (103) mit einer im Wesentlichen horizontalen Achse mit mindestens einem Schwenkelement (100) verbunden ist, wobei das Schwenkelement (100) ein Kipphebel ist, wobei der Kipphebel zwei ebene Teile (101, 102) umfasst, die starr miteinander verbunden sind und einen von null verschiedenen offenen Winkel (θ) bilden, wobei die Drehachse des Kipphebels an der Verbindung zwischen den zwei ebenen Teilen (101, 102) des Kipphebels so positioniert ist, dass eine Biegung gebildet wird, wobei die zwei ebenen Teile (101, 102) des Kipphebels dazu dienen, den Kipphebel in der einen oder anderen Richtung um seine Drehachse schwenken zu lassen, ohne einen Stellantrieb zum Erzeugen der Schwenkung zu verwenden.

2. System nach Anspruch 1, wobei wenigstens eines der Mittel zum kombinierten und gleichzeitigen Greifen und Heben (20) mindestens zwei Schwenkelemente (100, 200) umfasst, wobei die Schwenkelemente (100, 200) miteinander paarweise durch im Wesentlichen horizontale und zueinander parallele Achsen (103, 203) verbunden sind.

3. System nach einem der Ansprüche 1 bis 2, wobei wenigstens eines der Mittel zum kombinierten und gleichzeitigen Greifen und Heben (20) mindestens eine Vorrichtung zur Begrenzung der Winkelauslenkung (230, 300) mindestens eines Schwenkelements (100, 200) umfasst.

4. System nach einem der Ansprüche 1 bis 3, wobei wenigstens eines der Mittel zum kombinierten und gleichzeitigen Greifen und Heben (20) mindestens ein Teil zum Halten (110, 310) mindestens eines Schwenkelements (100, 200) in der angehobenen Position umfasst.

5. System nach einem der Ansprüche 1 bis 4, wobei mindestens ein Schwenkelement (100, 200) ein Führungsteil (161) zum Ausrichten des Rades (14) des rollenden Objekts (13) in dem das Führungsteil (161) umfassenden Schwenkelement (100, 200) umfasst.

6. System nach einem der Ansprüche 1 bis 5, wobei mindestens ein Schwenkelement (100, 200) ein Mittel zur Einstellung (240) der Breite des Schwenkelements (100, 200) umfasst, wobei das Mittel zur Einstellung (240) der Breite des Schwenkelements (100, 200) vorzugsweise ein beweglicher Flansch oder ein Keil ist.

7. System nach einem der vorhergehenden Ansprüche, wobei wenigstens eines der Mittel zum kombinierten und gleichzeitigen Greifen und Heben (20) dafür ausgelegt ist, gleichzeitig das Greifen und das Heben von mindestens zwei Rädern (14) des rollenden Objekts (13) durchzuführen, wobei die mindestens zwei Räder (14) des rollenden Objekts (13) vorzugsweise auf einer Achse positioniert sind, die im Wesentlichen quer zu dem elektrischen Antriebssystem (1) verläuft.

8. System nach einem der vorhergehenden Ansprüche, wobei wenigstens eines der Mittel zum kombinierten und gleichzeitigen Greifen und Heben (20) mindestens ein Mittel zur Bewegung des Mittels zum kombinierten und gleichzeitigen Greifen und Heben (20) in der Querrichtung umfasst, wobei die Querrichtung orthogonal zur Längsrichtung (x) ist, wobei die Längsrichtung (x) die Hauptbewegungsrichtung des lösbaren elektrischen Antriebssystems (1) ist.

9. System nach einem der vorhergehenden Ansprüche, wobei wenigstens eines der Mittel zum kombinierten und gleichzeitigen Greifen und Heben (20) ein Führungselement (160) umfasst, um vor dem Ergreifen und dem Heben des Rades (14) des rollenden Objekts (13) das Rad (14) des rollenden Objekts (13) in eine Richtung auszurichten, die einer zur Längsrichtung (x) des Fahrgestells (2) des Antriebssystems (1) im Wesentlichen senkrechten Richtung nahekommt.

10. System nach einem der vorhergehenden Ansprüche, wobei wenigstens eines der Mittel zum kombinierten und gleichzeitigen Greifen und Heben (20) einen ersten Anschlag (120, 220) umfasst, um das rollende Objekt (13) unbeweglich zu machen.

11. System nach einem der vorhergehenden Ansprüche, wobei wenigstens eines der Mittel zum kombinierten und gleichzeitigen Greifen und Heben (20) eine Hebevorrichtung umfasst, die dafür ausgelegt ist, in der angehobenen Position eine Bodenfreiheit zu garantieren, die größer als eine vordefinierte Höhe ist, wobei die vordefinierte Höhe vorzugsweise mindestens 40mm beträgt.

12. System nach Anspruch 11, wobei die Hebevorrichtung mindestens eine Rückstellfeder und/oder mindestens ein Gegengewicht und/oder mindestens eine angetriebene Stange umfasst.

13. System nach einem der vorhergehenden Ansprüche, wobei wenigstens eines der Mittel zum kombinierten und gleichzeitigen Greifen und Heben ein Mittel zur Einstellung der Längsposition umfasst.

14. System nach einem der vorhergehenden Ansprüche, wobei das Ankupplungsmittel zwei Mittel zum kombinierten und gleichzeitigen Greifen und Heben umfasst, wobei ein erstes Mittel zum kombinierten und gleichzeitigen Greifen und Heben (25) dafür ausgelegt ist, mindestens ein Rad des rollenden Objekts zu ergreifen und zu heben, das in der Querrichtung ausgerichtet ist, und ein zweites Mittel zum kombinierten und gleichzeitigen Greifen und Heben dafür ausgelegt ist, mindestens ein Rad des rollenden Objekts zu ergreifen und zu heben, das in einer Längsrichtung ausgerichtet ist.

15. System nach Anspruch 14, wobei das zweite Mittel zum kombinierten und gleichzeitigen Greifen und Heben einen Rahmen (23), mindestens einen in einer Längsrichtung (x) ausfahrbaren Arm (24), der mit dem Rahmen (23) verbunden ist, mindestens ein drittes Schwenkelement (22) und mindestens eine Schubvorrichtung (20) umfasst, wobei von dem dritten Schwenkelement (22) und der Schubvorrichtung (20) eines mit dem ausfahrbaren Arm (24) verbunden ist und das andere mit dem Rahmen (23) verbunden ist, wobei die Schubvorrichtung (20) geeignet ist, mindestens ein Rad des rollenden Objekts in der Längsrichtung (x) in das mindestens eine dritte Schwenkelement (22) zu schieben, wobei das dritte Schwenkelement (22) geeignet ist, um eine sich im Wesentlichen in Querrichtung erstreckende Achse (21) zu schwenken.

16. Gespann, welches ein rollendes Objekt (13) und ein elektrisches Antriebssystem (1) nach einem der vorhergehenden Ansprüche umfasst, wobei das rollende Objekt (13) an das elektrische Antriebssystem (1) durch die Ankupplungsmittel (5) angekuppelt ist.

17. Verfahren zum Ankuppeln eines rollenden Objekts (13) an das elektrische Antriebssystem (1) nach einem der Ansprüche 1 bis 15, welches die folgenden Schritte umfasst:
a) Das elektrische Antriebssystem (1) wird in Längsrichtung so verlagert, dass mindestens eines der Mittel zum kombinierten und gleichzeitigen Greifen und Heben (20) mindestens einem Rad (14) des rollenden Objekts (13) genähert wird,
b) das Mittel zum kombinierten und gleichzeitigen Greifen und Heben (20) oder das elektrische Antriebssystem (1) wird in der Querrichtung verlagert, um den Kontakt zwischen dem Rad (14) des rollenden Objekts (13) und dem Mittel zum kombinierten und gleichzeitigen Greifen und Heben (20) zu ermöglichen; und
c) die Verlagerung in der Querrichtung wird fortgesetzt, um das kombinierte und gleichzeitige Greifen und Heben mindestens eines Rades (14) des rollenden Objekts (13) zu ermöglichen.

## Claims

1. Removable electric propulsion system (1) for a rolling object (13), said propulsion system (1) comprising a chassis (2) provided with at least one wheel (3) driven by an electric machine (10) and with at least one non-driven wheel (4), said electric propulsion system (1) comprising at least one means (5) for hitching said electric propulsion system (1) to said rolling object (13), said hitching means (5) comprising two means (20) for the combined and simultaneous gripping and lifting of wheels (14) of said rolling object (13), said means being connected to one another by an actuator allowing the combined and simultaneous gripping and lifting means to be moved towards or away from one another, **characterized in that** at least one of said combined and simultaneous gripping and lifting means (20) comprises at least one frame (108) connected to the chassis (2) and at least one pivoting element (100) capable of supporting the wheel (14) of the rolling object (13), said frame (108) being connected to at least one pivoting element (100) by a first pivot connection (103) of substantially horizontal axis, the pivoting element (100) being a rocker, the rocker comprising two planar parts (101, 102) that are rigidly connected to one another and form a non-zero open angle (θ), the axis of rotation of the rocker being positioned at the connection between the two planar parts (101, 102) of the rocker so as to form a bend, the two planar parts (101, 102) of the rocker serving to cause the rocker to pivot about its axis of rotation, in one direction or the other, without using an actuator to generate the pivoting.

2. System according to Claim 1, for which at least one of said combined and simultaneous gripping and lifting means (20) comprises at least two pivoting elements (100, 200), said pivoting elements (100, 200) being connected to one another, in pairwise fashion, by substantially horizontal axles (103, 203) that are parallel to one another.

3. System according to either of Claims 1 and 2, for which at least one of said combined and simultaneous gripping and lifting means (20) comprises at least one device (230, 300) for limiting the angular displacement of at least one pivoting element (100, 200).

4. System according to one of Claims 1 to 3, for which at least one of said combined and simultaneous gripping and lifting means (20) comprises at least one piece (110, 310) for holding at least one pivoting element (100, 200) in the raised position.

5. System according to one of Claims 1 to 4, for which at least one pivoting element (100, 200) comprises a guide piece (161) for orienting the wheel (14) of the rolling object (13) in said pivoting element (100, 200) comprising said guide piece (161).

6. System according to one of Claims 1 to 5, for which at least one pivoting element (100, 200) comprises a means (240) for adjusting the width of said pivoting element (100, 200), said means (240) for adjusting the width of said pivoting element (100, 200) preferably being a movable flange or a wedge.

7. System according to one of the preceding claims, for which at least one of said combined and simultaneous gripping and lifting means (20) is configured to simultaneously grip and lift at least two wheels (14) of the rolling object (13), said at least two wheels (14) of the rolling object (13) preferably being positioned on an axle substantially transverse to said electric propulsion system (1).

8. System according to one of the preceding claims, for which at least one of said combined and simultaneous gripping and lifting means (20) comprises at least one means for moving in the transverse direction of said combined and simultaneous gripping and lifting means (20), the transverse direction being orthogonal to the longitudinal direction (x), the longitudinal direction (x) being the main direction of movement of said removable electric propulsion system (1).

9. System according to one of the preceding claims, for which at least one of said combined and simultaneous gripping and lifting means (20) comprises a guide element (160) for orienting the wheel (14) of the rolling object (13) in a direction close to a direction substantially perpendicular to the longitudinal direction (x) of said chassis (2) of said propulsion system (1), prior to the gripping and lifting of said wheel (14) of the rolling object (13).

10. System according to one of the preceding claims, for which at least one of said combined and simultaneous gripping and lifting means (20) comprises a first stop (120, 220) for immobilizing the rolling object (13).

11. System according to one of the preceding claims, for which at least one of said combined and simultaneous gripping and lifting means (20) comprises a raising device configured to ensure a ground clearance that is greater than a predefined height in the raised position, the predefined height preferably being at least 40 mm.

12. System according to Claim 11, for which the raising device comprises at least one return spring and/or at least one counterweight and/or at least one driven rod.

13. System according to one of the preceding claims, for which at least one of said combined and simultaneous gripping and lifting means comprises a means for adjusting the longitudinal position.

14. System according to one of the preceding claims, for which said hitching means comprises two combined and simultaneous gripping and lifting means, a first combined and simultaneous gripping and lifting means (25) being configured to grip and lift at least one wheel of the rolling object, said wheel being oriented in the transverse direction, and a second combined and simultaneous gripping and lifting means being configured to grip and lift at least one wheel of the rolling object, said wheel being oriented in a longitudinal direction.

15. System according to Claim 14, for which said second combined and simultaneous gripping and lifting means comprises a surround (23), at least one arm (24) that is extendable in a longitudinal direction (x) and is connected to the surround (23), at least a third pivoting element (22) and at least one pushing device (20), one of said third pivoting element (22) and the pushing device (20) being connected to said extendable arm (24) and the other being connected to the surround (23), said pushing device (20) being capable of pushing at least one wheel of the rolling object in said longitudinal direction (x) into said at least third pivoting element (22), said third pivoting element (22) being capable of pivoting about a substantially transversely directed axle (21) .

16. Hitch comprising a rolling object (13) and an electric propulsion system (1) according to one of the preceding claims, said rolling object (13) being hitched to said electric propulsion system (1) by said hitching means (5).

17. Method for hitching a rolling object (13) to the electric propulsion system (1) according to one of Claims 1 to 15, comprising the following steps:
a) moving the electric propulsion system (1) longitudinally in such a way as to move closer to at least one of said means (20) for the combined and simultaneous gripping and lifting of at least one wheel (14) of the rolling object (13),
b) moving the combined and simultaneous gripping and lifting means (20) or the electric propulsion system (1) in the transverse direction so as to allow contact between the wheel (14) of the rolling object (13) and the combined and simultaneous gripping and lifting means (20); and
c) continuing the movement in the transverse direction so as to allow the combined and simultaneous gripping and lifting of at least one wheel (14) of the rolling object (13) .
